(19) Europäisches Patentamt
European Patent Office
Office européen des brevets

(11) Publication number: **0 167 629 B1**

(12) **EUROPEAN PATENT SPECIFICATION published in accordance with Art. 158(3) EPC**

(45) Date of publication of patent specification: **10.04.91** (51) Int. Cl.[5]: **C08L 77/00**

(21) Application number: **85900197.6**

(22) Date of filing: **20.12.84**

(86) International application number:
**PCT/JP84/00605**

(87) International publication number:
**WO 85/02859 (04.07.85 85/15)**

(54) **POLYAMIDE-BASE MIXED RESIN COMPOSITION AND MELT EXTRUSION MOLDINGS THEREOF.**

(30) Priority: **22.12.83 JP 240916/83**

(43) Date of publication of application:
**15.01.86 Bulletin 86/03**

(45) Publication of the grant of the patent:
**10.04.91 Bulletin 91/15**

(84) Designated Contracting States:
**DE FR NL**

(56) References cited:
**DE-A- 3 026 960**
**JP-B- 5 633 425**
**US-A- 3 845 163**

**No relevant documents have been disclosed**

(73) Proprietor: **Asahi Kasei Kogyo Kabushiki Kaisha**
**2-6, Dojimahama 1-chome Kita-ku**
**Osaka-shi Osaka 530(JP)**

(72) Inventor: **KAHATA, Shin**
**57-11, Midoricho**
**Kameyama-shi Mie 519-01(JP)**
Inventor: **KOYAMA, Shigehisa Asahi Kasei Shataku**
**1-2, Hiratanakamachi**
**Suzuka-shi Mie 513(JP)**

(74) Representative: **Strehl, Schübel-Hopf, Groening**
**Maximilianstrasse 54 Postfach 22 14 55**
**W-8000 München 22(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

[TECHNICAL FIELD]

The present invention relates to improvements of polyamide resins, and more particularly to improvements of polyamide-based blended resin compositions for melt-extrusion processing, which comprise blending a polyamide resin with other specific resins in specific proportions to give unique properties.

[PRIOR ART AND DRAWBACKS THEREOF]

Polyamide resins have advantages in that favorable properties inherent in themselves, such as toughness, heat resistance, cold resistance, oil resistance, and surface smoothness are all on high levels, and additionally in that they are provided with some degree of gas barrier property Accordingly, polyamide resins have so far been utilized separately or cojointly with other materials for constructing laminates in the field of melt-extrusion processing.

For example, polyamide resins are applied to; injection molding, in which molten resins are extruded into prescribed molds and set to take the shapes of the mold cavities, to make toys such as plastic models, dolls, etc. and parts thereof, machine parts such as gears, packing, shafts, bearings, etc., housing parts such as sliding door wheels, joint filler, curtain sliders, etc., and miscellaneous housewares such as deodorizer sealed containers and soucers; continuous extrusion processing to form pipes, rods, wire coatings, etc. with cross-sectional shapes of extrudates being kept as such; blow molding, in which extruded tubes are expanded to form containers and the like having prescribed shapes; and casting, in which extruded plates or the like are cooled and withdrawn. Thus polyamide resins are applied to various melt-extrusion molding processes and there are known a great number of different formed products thereof.

Moreover, since polyamide resin, when oriented to suitable extents, can be enhanced notably in mechanical properties and provided with heat shrinkability and other desirable properties, the extrusion-stretch processing of polyamide resins is widely practiced, in which an molten resin is extruded through a T-die or a circular die and stretched by a tenter system or by an inflation system to produce oriented films.

However, a drawback of polyamide resins is that, since the temperature dependence of the melt viscosity is great and the inherently large drawdown increases more in low viscosity regions, large quantities of energy and sophisticated techniques are necessary for melt-extrusion processing thereof, particularly when uniformity is required for the extrusion processing. For instance, this has brought about the following difficulties: The adoption of extrusion conditions to prevent a large drawdown of the extrudate increases the specific energy consumed for extrusion, and still cannot satisfactorily prevent the drawdown, so that it is obliged today to apply sophisticated techniques such that an extruded film is attached to a casting roll immediately under the die or a mandrel set up for cooling an extruded tube, and that suitable conditions are determined for balancing the drawdown decreasing effect against unfavorable effects, such as an increase in thickness irregularity, resulting from the above measures; a high stress is required in order to stretch or tenter the highly viscous resin, particularly in order to stretch the resin in a high elasticity region for the purpose of giving a high degree of orientation, and because this high stress acts as an obstacle, for example, the thickness becomes more uneven due to stress concentration or the range wherein the inflation stretching is applicable is limited by an increased pressure in the bubble, thereby lowering the quality level of the resulting products and restricting the degree of freedom in choosing the production facility and means.

The second drawback of polyamide resins is that they are classified as a group in the gas barrier property however the barrier property level thereof is markedly lowered due to the hygroscopy of the resins.

The third drawback, in connection with the hygroscopic property, is that mechanical properties and dimensional stability of molded products vary greatly with humidity.

The second and third drawbacks are remarkable in blow molded articles and stretch-formed articles (films), which have high ratios of the surface area to the unit weight of article. Consequently, for packaging films which are used under various environmental conditions and required to have high degrees of gas barrier property, polyamide resins are seldom used in the form of single-layer films and a moisture-barrier layer is usually laminated on each polyamide film. It may be said that this, on the other hand, brings about the disadvantage of sacrificing excellent properties of polyamide resins.

In the present specification, hereinafter the films of polyamide resins described, particularly on the evaluation of properties thereof, are mostly stretched single-layer films.

This is because it is considered that if a polyamide resin composition which can overcome the above noted drawbacks is obtained for use as films specially as stretched films, which are in usual markedly adversely affected by the hygroscopy in particular among the three drawbacks, such a composition will be naturally utilizable in the fields of lamination and thick board injection as well, wherein the hygroscopy has less adverse effect on the formed products.

[DIFFERENCE BETWEEN THIS INVENTION AND THE PRIOR ART NEAREST THERETO IN CONSTRUCTION]

The technical philosophy is not new which contemplates blending a polyamide resin with another resin to produce a composition having excellent properties and utilizing these properties to overcome the above noted drawbacks of polyamide resins.

Technical philosophies nearest above all to that of this invention are described, for example, in Japanese Patent Application Laid-Open Nos. 146758/81 (referred to as "i", hereinafter, and so on), 16576/79 (ii), and 167751/81 (iii), and Japanese Patent Publication No. 33425/81 (iv).

These prior inventions, however, are inferior to this invention in effects, i.e. properties and levels improved for overcoming said drawbacks. This will be described in the latter half of this specification.

From the following description it will be apparent that the technical philosophy of this invention does not result by extending those of the prior inventions.

The above prior documents (i), (ii), and (iii) describe that polyamide resins are miscible with an olefinic ionomer resin, that they are miscible with a saponified ethylene-vinyl acetate copolymer, and that they are miscible with a polypropylen resin and an olefinic ionomer resin, respectively. These documents state that these blended resins, improve polyamide resins in certain points relating to drawbacks thereof. Accordingly, these documents (i), (ii), and (iii), combined together, teach that the three resins, polyamide, saponified ethylene-vinyl acetate copolymer, and olefinic ionomer, are compatible with another though a suitable mixing proportion range may be exist for each component resin. Further the document (iv), though the object of the invention is somewhat different, teaches concretely that the above three resins are miscible to form a three-resin blend composition.

Details of document (iv) are as follows: It specifies that the three-resin compositions having transparency (meaning contrary to haze) contain 25 to 40% by weight of polyamide, 65 to 20% by weight of the saponified ethylene-vinyl acetate copolymer, and 10 to 40% by weight of the olefinic ionomer resin. That is, the document (iv) indicates, though indirectly, that in the range of blending proportions defined according to the present invention, the composition has low clarity and therefore cannot be put into practical survice.

Table 1 and Figs. 6, 7, and 8 illustrate a phenomenon which was a foothold for completing this invention, and show results of tests for hazes of extrudates (parisons) (see Example 1).

Table 1 means that resin blends having the same resin components but different blending proportions include a composition the haze of which does not vary but remains high regardless of variation in the mixing intensity (conditions of resin mixing were varied by exchanging the screw) of the extruder used and a composition the haze of which varies from a high value (inferior in transparence) to a low value (superior in transparence) with the mixing intensity and the difference in blending proportions between the two compositions is small and the latter composition the haze of which varies with the mixing intensity falls in the range of blending proportions defined according to the invention.

Table 1

| Run No. | Conditions of experiment | Haze (%) Composition (1) | Haze (%) Composition (2) |
|---|---|---|---|
| 1 | Extruder (D:40 mm), Screw revolution: 50 r.p.m.<br>Screw dimensions<br>L/D = 20<br>Feed section 14.5D — Screw flight pitch 50 mm<br>Transition section 0.5D — Feed channel depth 8.0 mm<br>Metering section 5.0D — Metering channel depth 2.2 mm | 18 | 16 |
| 2 | Extruder (D:40 mm), Screw revolution: 50 r.p.m.<br>Screw dimensions<br>L/D = 22<br>Feed section 15.0D<br>Transition section 1.5D<br>Metering section 5.5D<br>In the metering section 1.0D, 40 mixing pins (dia. 3 mm, height 1.5 mm) were arranged. | 15 | 7 |
| 3 | Extruder (D:40 mm), Screw revolution: 50 r.p.m.<br>Screw dimensions<br>L/D = 22<br>Feed section 14.0D — Dulmage section 1.5D<br>Transition section 1.5D — Dulmage pitch 4 mm<br>Metering section 5.0D — Dulmage flight width 2 mm | 12 | 4 |

| Composition: | (1) out of the scope of the invention | (2) in the scope of the invention |
|---|---|---|
| Polyamide resin | 70 (wt%) | 70 (wt%) |
| α-Olefinic ionomer resin | 25 " | 15 " |
| Saponified ethylene-vinyl acetate copolymer | 5 " | 15 " |

Figs. 6, 7, and 8 are electron microscopic photographs (magnification 300) of cross sections of parisons. These photographs illustrate results of analyzing a phenomenon which gave a foothold for completing the invention. Parisons of Figs. 6, 7, and 8 correspond to Run No. 1 Composition (1), Run No. 1 Composition (2), and Run No. 3 Composition (2), respectively. The cross section of each parison had been treated with DMSO (dimethylsulfoxide) by dipping therein.

Whereas the parisons of Figs. 6 and 7 looked similarly whity turbid and no particular difference in appearance was found therebetween, the treatment thereof with a solvent (DMSO in this case) showed the dispersion state of the resin dissolved by the solvent (in this case, conceivably both the saponified ethylene-vinyl acetate copolymer and the olefinic ionomer resin), thereby revealing some difference in mixing uniformity between both parisons. Figs. 6 and 7 indicate such a case.

That is, the dispersion of the DMSO-soluble resin in Fig. 6 is observed in the state of slightly larger grains scattered, while the distribution in Fig. 7 is observed as a number of streaks arranged.

When the mixing intensity in extrusion is enhanced, the parison of Fig. 6 is still kept in a turbid state as shown in Table 1 - Run 3 Composition (1) and the cross section of the parison appears like Fig. 6, while the parison of Fig. 7 is markedly improved in transparency as shown in Table 1 - Run 3 Composition (2) and the cross section of the parison becomes as shown in Fig. 8, wherein the distribution of the DMSO-soluble resin appears as smaller grains scattered.

Thus, Figs. 6 to 8 indicate that there is the possibility that a difference in the distribution state between two resin blends of different compositions exists depending on the mixing degree, even when the blends are evaluated as no difference in the mixing state exists therebetween from the appearance thereof. The blending proportion range defined according to this invention is an undeveloped region that the present inventors are the first successful in finding out after continuous throughgoing studies of distribution states of resins in blends by using various solvents.

Accordingly, it should be said that properties shown by the resin composition of this invention are those hitherto unknown, based on the improved distribution state of component resins.

It may be noted that whether the mixing intensity of an extruder, herein referred to, is high or low is difficult to express quantitatively in terms of, for example, the geometry and structure of the extruder or specifications thereof, and after all must be judged by observing the distribution of component resins in the mixed and extruded products. However, when resin compositions in the scope of the invention are used, the mixing state can be judged by evaluating haze values of flat parisons about 0.4 mm thick extruded through a die slit whether the values are up to 5% or not.

## [OBJECTS OF THE INVENTION]

The invention relates to the improvement of polyamide resins which has been made in view of the above described present state of the art.

It is the first object of the invention to provide a polyamide-based blended resin composition excellent in transparency and low temperature toughness which can be melt-extruded and stretched, under conditions for low drawdown, with greatly reduced specific energy and stress (stretch stress) required for stretch and in addition can give formed products having such a high level of gas barrier property ($O_2TR$ = Oxygen Transmission Rate) that has hitherto been unattainable with any of polyamide resins.

It is the second object of the invention to provide a polyamide-based blended resin composition capable of being formed by melt extrusion and if necessary, by stretching, into articles, particularly oriented films, which are less affected adversely in gas barrier property and in mechanical properties by humidity (less humidity dependence of gas barrier property and mechanical properties), while the gas barrier property is conventionally liable to be adversely affected by environmental humidity, and/or the formed articles or oriented films exhibiting high heat shrinkability and great heat shrink stress while keeping the normal-temperature dimensional stability and the low temperature toughness on high levels.

It is the third object of the invention to provide a polyamide-based blended resin composition which, in connection with the first and second objects, is improved to exhibit less drawdown, while large drawdown will become a significant obstacle particularly to film formation, whereby films of intended wide width can be produced economically without using a device, such as a mandrel inserted inside the extruded parison, which has, on the other hand, adverse effects on product quality such as the surface state or thickness uniformity of resulting films, on the setting of production conditions, or on operations.

## [CONSTITUTION OF THE INVENTION]

The above and other objects of the invention can be readily achieved by preparing a polyamide-based blended resin composition consisting of 80 to 60% by weight of a polyamide resin, 10 to 30% by weight of a saponified of an ethylene-vinyl acetate copolymer, and 10 to 30% by weight of either an $\alpha$-olefinic ionomer resin or a mixture of two or more resins which is composed of an $\alpha$-olefinic ionomer resin as the

main component and at least one selected from ethylene-acrylic acid copolymer resins, modified ethylene-vinyl acetate copolymer resins, and ethylene-vinyl acetate copolymer resins, where the total of the resin proportions is 100%, and by melt-extrusion processing of the resin blend.

[BRIEF DESCRIPTION OF THE DRAWINGS]

Figs. 1A and 1B show results of experiments on component resin proportions in resin blends of the invention (corresponding to Examples-Comparative Examples 1 and 2).

Figs. 2, 3, and 4 show results of experiments referring to characteristics of resin blends of the invention (corresponding to Experiment Example 2 and Example-Comparative Example 3).

Fig. 5 shows results of comparing films prepared from resin blends of the invention with commercial polyamide-based films (corresponding to Example-Comparative Example 4).

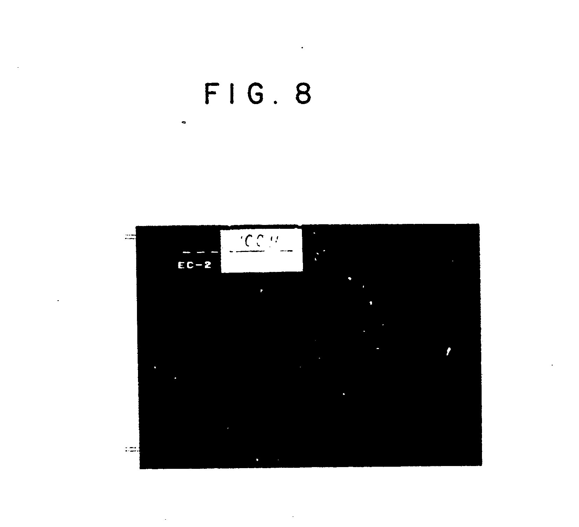

Figs. 6, 7, and 8 show distribution states of resins in extruded parisons, wherein Fig. 6 is of a comparative parison and Figs. 7 and 8 show variations of the distribution state in parisons of the same composition (corresponding to Experiment Example 1).

[REQUIREMENTS FOR CONSTITUTION OF THE INVENTION AND EFFECTS THEREOF]

Referring now to drawings, features of the invention are described in detail.

Fig. 2 shows results of experiments which exemplify the ease of melt-extruding the resin blend of the invention (referring to details thereof, see Experiment Example 2). The graduations on the ordinate indicate specific energies (unit: KW.h/kg) for extrusion and those on the abscissa indicate screw revolutions (unit: r.p.m.) in extrusion. Curve I of the two is for a typical resin blend of the invention and curve II is for a polyamide single resin for comparison.

The results shown in Fig. 2 indicate that the resin blend of the invention can be extruded under steady conditions (at a screw revolution of about 70-80 r.p.m.) with an about 30% less specific energy than the polyamide single resin can.

This reduction of specific extrusion energy alone can also be achieved, for instance, by raising the extrusion temperature of resin to lower the viscosity of extruding resin. In the case of polyamide resin, however, lowering the viscosity of extruding resin results in a further increase in the drawdown which is large even under ordinary conditions. It is common therefore that the extrusion temperature of polyamide resin is set rather low to control this drawdown. Considering that drawdown values [(diameter of die orifice)-(diameter of extrudate at a prescribed distance from the orifice)] measured for confirmation in the experiments of Fig. 2 were 35 mm and 17 mm in the respective cases of the polyamide single resin and the resin blend of the invention, it may be understood that the extrusion temperature 240 °C in the case of the polyamide single resin is common extrusion condition in view of the control of drawdown.

Experiments were also conducted on the matter of solving by known cooling methods the drawdown problem that inevitably occurs in film production by extrusion. According to these experiments, the drawdown in the case of the blend of the invention could be reduced from the above value 17 mm to 0 mm by a simple method called the water film cooling method, while the polyamide single resin required after all the mandrel cooling method, wherein sophisticated techniques are necessary. This difference is presumably due to the fundamental superiority of the blend of the invention, that is, superior properties thereof, such as the low drawdown tendency and the little temperature dependence of melt viscosity.

Fig. 3 shows results of experiments which exemplify the ease of extending, particularly the ease of stretching, of the resin blend of the invention (referring to details thereof, see Experiment Example 2). The graduations on the ordinate indicate stretching stress values (unit: $10N/mm^2$ ($Kg/mm^2$)) and those on the abscissa indicate stretching temperatures (°C), where the stretching ratio was 3:1. Line III of the two is for a typical resin blend of the invention and line IV is for a polyamide singl resin for comparison.

Fig. 3 proves that the blend of the invention can be stretched with a stress about 2/5 as low as that required for the polyamide single resin. For instance, it is generally regarded that, when stretched films are produced by the inflation method, the stretching of a resin exhibiting high stretching stress is extremely difficult. A reason for this is as follows: A resin requiring the higher stretch stress needs the higher inner pressure of the inflation bubble; the higher inner pressure tends to more concentrate stretch stress on weak portions of the bubble; this develops difficulties in the operation of introducing gas into the bubble, elevates the probability of bubble puncture, and amplifies the unevenness of bubble thickness; in addition, crashes generated by punctures of high inner pressure inflation bubbles have undesirable effect on environmental

hygiene; this is one of great obstacles. Such being the case, the resin blend of the invention shown in Fig. 3 is valuable in revealing that stretch of polyamide-based resins which have been regarded as difficult to stretch has been facilitated by lowering the stress necessary for stretching to about 2/5 through blending.

Fig. 4 shows results of experiments which exemplify a specific property of the resin blend of the invention (referring to details thereof, see Example-Comparative Example 3). The graduations on the abscissa indicate temperatures of heat set under tension in film production, those on the left ordinate indicate percentages of shrinkage (unit: %) of produced films in 90 °C hot water, and those on the right ordinate indicate percentages of dimensional change of produced films at normal temperature. The solid line is for a resin blend of the invention and the broken line is for a polyamide single resin.

Meaning of Fig. 4 is as follows: In general, the percentage shrinkage of films in hot water and the percentage dimensional change thereof at normal temperature are controlled by heat set treatement under tension. However, since both values tend to behave similarly toward conditions of the heat set treatment, the latitude of controlling both values is narrow; for instance, while a film exhibiting a large hot water shrinkage and a large dimensional change at normal temperature (poor dimensional stability at normal temperature) is readily prepared, it has hitherto been impossible to prepare a film which exhibits a large hot water shrinkage but a small normal temperature dimensional change. In the field of shrink packaging utilizing the heat shrinkability of films, films are requested to exhibit percentages of heat shrinkage as high as at least 26% so as to achieve tighter packaging and still percentages of normal temperature dimensional change of up to 2% so as to secure the dimensional stability of the films during transport and storage. In this respect, while the film of the polyamide single resin (broken line) is in a borderline case where it hardly meet the above requirements, the film of the resin blend of the invention (solid line) can sufficiently afford to satisfy the requirement for normal temperature dimensional change (excellent dimensional stability) and meet the requirement for higher hot water shrinkage.

Table 5

| Item of evaluation | | Film formed of resin blend of the invention | Film formed of polyamide single resin |
|---|---|---|---|
| Oxygen permeability ($O_2TR$) | In 12% RH ① | 300 | 800 |
| | In 90% RH ② | 500 | 2200 |
| | Rate of permeability decrease (② - ①) ÷ ① | 0.67 | 1.75 |
| Water vapor permeability (WVTR) | | 2000 | 3800 |
| Tensile strength (T.S.) | In 12% RH ① | 23/23 | 26/26 |
| | In 90% RH ② | 15/15 | 8/8 |
| | Rate of T.S. decrease (① - ②) ÷ ① | 0.35 | 0.69 |

Table 5 shows results of experiments which exemplify a feature of films formed of the resin blend of the invention, by comparing gas barrier properties and a mechanical property thereof with those of films formed of a polyamide single resin (referring to details thereof, see Example-Comparative Example 3).

Table 5 verifies that the blended resin composition of the invention in comparison with the polyamide resin is featured in that the film of the present composition exhibits good gas barrier properties (low in both $O_2$TR and WVTR) and retains the good oxygen barrier property under high humidity conditions.

Referring to mechanical properties, for example, tensile strength of films, the present composition cannot be regarded as superior to the polyamide single resin under low humidity condition, but it may be noted that the present composition is hardly affected adversely by the absorption of moisture and therefore surpasses by far the polyamide single resin under high humidity conditions.

Table 6

| Properties evaluated | Composition | | | |
|---|---|---|---|---|
| | Resin composition of the invention (68, 17, 15) | Commercial composition 1 (polyamide) | Commercial composition 2 (polyamide/polyethylene coated with vinylidene chloride) | Commercial composition 3 (polyethylene/polyamide/polyethylene) |
| Oxygen-barrier property | ◎ | ○ | ◎ | ◎ |
| Humidity dependence of tensile strength | ○ | x | ◎ | ◎ |
| Dimensional change at normal temperature | ◎ | ○ | ○ | ○ |
| Shrinkage in hot water | ◎ | x | ○ | ◎ |
| Shrinkage stress in hot water | ◎ | ○ | ○ | ○ |
| Pinhole-proof property at low temperature | ◎ | ○ | ◎ | ◎ |
| Clarity (contrary to haze) | ◎ | ○ | ○ | ○ |

Table 6 and Fig. 5 show experiment results exemplifying the usefulness of the resin composition of the invention by comparing a monolayer stretched film (heat shrinkable film) thereof with commercial heat-shrink-packaging films of similar type (referring to details, see Example-Comparative Example 4). It may be noted that commercial films 2 and 3 are multilayer composites.

From the results shown in Table 6 and Fig. 5, the film formed of the present composition, in spite of a monolayer film, proves to combine performance characteristics superior or comparable to the commercial multilayer films.

This means that the resin composition of the invention breaks down a conventional common knowledge on polyamide resins, i.e. the common knowledge that a polyamide resin, when formed into heat-shrinkable•tight packaging films, which will be exposed to various environments, should be laminated with another resin to offset drawbacks thereof, and that monolayer films of the present resin composition can compete sufficiently with multilayer films.

Fig. 5 shows results of evaluating films taking notice of the temperature dependence of heat shrinkability shown in Table 6. The graduations on the abscissa indicate hot water temperatures (unit: °C) at heat shrinking operations and the graduations on the ordinate indicate percentages of film shrinkage (unit: % in average value of longitudinal (or machine) direction and transverse direction) at corresponding heat operations.

It can be seen from Fig. 5 that the film formed of the resin composition of the invention exhibits high percentages of heat shrinkage over a wide temperature range and particularly at lower temperatures. Accordingly films formed of the present resin composition will exhibit great effects when used in application fields where low-temperature shrinkability is required, for example, fields of stretch packaging of fresh meats, processed meat foods, etc.

The results shown in Table 6 and Fig. 5 merely exemplify an advantage of the present composition, i.e. the advantage of its being utilizable in the form of single-layer films, and are not to be construed to deny the use of the composition for multilayer films. This will be understood from the following explanation: For example, when the present composition, which has a high heat shrinkability as shown in Fig. 5, is used for one of the layers of a two-layer laminate, the overall heat shrinkability of the laminate will be obviously high even if the heat shrinkability of the other layer is insufficient, since the high shrinkability of the composition will compensate it.

Fig. 1A is an analytic diagram corresponding to experimental results shown in Table 2 and eventually to an important part of the appended claims (referring to details thereof, see Example-Comparative Example 1).

Table 2 shows experimental results of collective evaluation of three-component mixtures composed of a polyamide resin, a saponified ethylene-vinyl acetate copolymer, and an α-olefinic ionomer resin in varying proportions, from the viewpoint of the degree of filling the above objects of the invention. However, no regularity can be found from the results shown in Table 2, in which good and bad results of evaluation are mixed at random.

Fig. 1A is a triangular diagram representing the blending proportions (the total of proportions is always 100) of the three component resins. The top, left bottom, and right bottom vertexes indicate the compositions of 100 wt% of the polyamide resin, 100 wt% of the α-olefinic ionomer resin, and 100 wt% of the saponified ethylene-vinyl acetate copolymer, respectively. Accordingly, the gradations on the left slant side of the triangle indicate the polyamide-to-ionomer blending ratios, those on the bottom side the ionomer-to-saponified copolymer ratios, and those on the right slant side the saponified copolymer-to-polyamide ratios, wherein the total of blending proportions of the three components are always 100 wt%. Thus Fig. 1A is a triangular diagram drawn by plotting the collective evaluation results according to the above stated coordinate system.

The analytic results shown in Fig. 1A prove that the compositions satisfying the objects of the invention need to lie at least in the triangular region bounded by the straight lines connecting the three points (the proportions of the three components are expressed in order of the polyamide resin, α-olefinic ionomer resin, and saponified ethylene-vinyl acetate copolymer) A (80, 10, 10), B (60, 30, 10), and C (60, 10, 30).

In other words, the compositions satisfying the objects of the invention have the following blending proportions of the component resins.

Proportion of polyamide resin = (quantity of polyamide resin/total quantity of three component resins) x 100 = 60 - 80% by weight

Proportion of α-olefinic ionomer = (quantity of α-olefinic ionomer/total quantity of three component resins) x 100 = 10 - 30% by weight

Proportion of saponified ethylene-vinyl acetate copolymer = (quantity of saponified ethylene-vinyl

acetate copolymer/quantity of three component resins) x 100 = 10 - 30% by weight

To give higher degrees of properties such as the oxygen barrier property, percentage of hot water shrinkage, and clarity, preferred compositions are in the triangular region bounded by the straight lines connecting points D (70, 15, 15), E (65, 20, 15), and F (65, 15, 20), that is, the preferred compositions shown in Fig. 1A contain 65 to 70% by weight of the polyamide resin, 15 to 20% by weight of the α-olefinic ionomer resin, and 15 to 20% by weight of the saponified ethylene-vinyl acetate copolymer.

Table 2

| Composition No. | Component (wt%) | | | Oxygen-barrier property | Humidity dependence of tensile strength | Percentage of dimensional change at normal temperature |
|---|---|---|---|---|---|---|
| | Polyamide resin | α-Olefinic ionomer resin | Saponified ethylene-vinyl acetate copolymer | | | |
| 1 | 100 | 0 | 0 | X | X | X |
| 2 | 90 | 10 | 0 | X | ○ | X |
| 3 | 90 | 0 | 10 | ○ | X | X |
| 4 | 80 | 10 | 10 | ○ | ◎ | Δ |
| 5 | 70 | 25 | 5 | X | ◎ | ○ |
| 6 | 70 | 15 | 15 | ◎ | ◎ | ○ |
| 7 | 70 | 5 | 25 | ◎ | X | X |
| 8 | 65 | 20 | 15 | ◎ | ◎ | ○ |
| 9 | 65 | 15 | 20 | ◎ | ◎ | ○ |
| 10 | 60 | 30 | 10 | ○ | ○ | ○ |
| 11 | 60 | 10 | 30 | ◎ | Δ | ○ |
| 12 | 55 | 35 | 10 | ◎ | ◎ | ○ |
| 13 | 55 | 10 | 35 | ◎ | Δ | ○ |
| 14 | 50 | 25 | 25 | ◎ | ◎ | ○ |
| 15 | 90 | 5 | 5 | X | Δ | X |

Table 2 (Cont'd)

| Percentage of shrinkage in hot water | Shrink stress in hot water | Pinhole-proof property at low temperature | Haze | Collective evaluation |
|---|---|---|---|---|
| ○ | ○ | × | ○ | × |
| ○ | ○ | △ | ○ | × |
| ○ | ○ | × | ○ | × |
| △ | ○ | △ | ○ | ○ |
| ○ | ○ | ○ | × | × |
| ○ | ○ | ○ | ○ | ◎ |
| ○ | △ | × | △ | × |
| ○ | △ | ○ | ○ | ◎ |
| ○ | △ | △ | ○ | ◎ |
| △ | △ | ○ | △ | ○ |
| △ | △ | △ | △ | ○ |
| × | × | ○ | × | × |
| × | × | △ | × | × |
| × | × | ○ | × | × |
| ○ | ○ | × | ○ | × |

Table 3 shows basic-experimental results shown in Fig. 1B which correspond to another important section of the appended claims (referring to details, see Example-Comparative Example 2).

More specifically, Table 3 answers the theme of determining what other resin can be substituted for a part of the α-olefinic ionomer resin in some suitable compositions shown in Fig. 1A. In the experiments evaluation results of which shown in Table 3, other resins selected for the substitution are three types of resin: an ethylene-acrylic acid copolymer, modified ethylene-vinyl acetate copolymer, and ethylene-vinyl acetate copolymer, and additionally mixtures thereof. Table 3 shows that every resin selected can be substituted not completely for the α-olefinic ionomer resin, that is, each selected resin needs to be used cojointly with the α-olefinic ionomer resin, where the combined content of the other resin with the ionomer resin may be 10 to 30% by weight.

This is because the composition of the invention is derived from the basic philosophy of blends of a polyamide resin, a saponified ethylene-vinyl acetate copolymer, and an α-olefinic ionomer resin in a specific range of blending proportions as shown in Fig. 1A, so that the change of any of the components to another resin or to other various resins is restricted, that is, there is no sufficient latitude in component combination.

Fig. 1B shows results of revising Fig. 1A and the collective results of Figs. 1A and 1B represent the principal part of the appended claims.

The results shown in Table 3 indicate that the quantity of the other component resin (i.e. an ethylene-acrylic acid copolymer, modified ethylene-vinyl acetate copolymer, ethylene-vinyl acetate copolymer, or a mixture of these polymers) to be substituted for a part of the α-olefinic ionomer resin is desirably less than 30% by weight of the original quantity of the ionomer resin and up to 8% by weight of the total weight of the resin composition. In Table 3 the effect of the other component resin itself is not specifically indicated. However, the present inventors have confirmed in study that the other component resin can be conveniently

used in such small amounts as to achieve the objects of the invention for improvements of the resin composition in processability and properties (control of crystallization rate, crystallinity, and melt viscosity and improvement of film toughness).

Table 3

| Content of α-component (wt%) | Resin as α-component | Content of IR in α-component (wt%) | $\frac{(\alpha\text{-IR})\times 100}{PA+EVOH+\alpha}$ (wt%) | Oxygen-barrier property | Humidity dependence of tensile strength |
|---|---|---|---|---|---|
| 10 | IR | 100 | 0 (blank) | ◎ | Δ |
| " | IR + $EVA_1$ | 80 | 2 | ◎ | Δ |
| " | IR + $EVA_2$ | 70 | 3 | ◎ | ○ |
| " | IR + EAA | 60 | 4 | ◎ | ○ |
| 20 | IR | 100 | 0 (blank) | ○ | ◎ |
| " | IR + $EVA_1$ | 60 | 6 | ○ | Δ |
| 30 | IR | 100 | 0 (blank) | ○ | ○ |
| " | IR+$EVA_1$+EAA | 80 | 6 | ○ | ○ |
| " | IR + EAA | 74 | 7.8 | ○ | ○ |
| " | IR + EAA | 70 | 9 | Δ | Δ |
| 10 | $EVA_2$ | 0 | 10 | ◎ | X |
| " | EEA | 0 | 10 | ◎ | X |
| " | EAA + $EVA_2$ | 0 | 10 | ◎ | Δ |

- to be cont'd -

Table 3 (Cont'd)

| Percentage of dimensional change at normal temp. | Percentage of shrink in hot water | Pinhole-proof property at low temperature | HAZE |
|---|---|---|---|
| ○ | ○ | △ | ○ |
| ○ | ○ | △ | ○ |
| ○ | ○ | △ | ○ |
| ○ | ○ | × | ○ |
| ○ | ○ | ○ | △ |
| ○ | ○ | △ | × |
| ○ | △ | ○ | △ |
| ○ | △ | ○ | △ |
| ○ | △ | ○ | △ |
| ○ | △ | × | × |
| ○ | ○ | × | × |
| ○ | ○ | × | × |
| ○ | ○ | × | × |

Remarks

| | |
|---|---|
| α-Component: | A group of resins substitutive for the α-olefin ionomer resin |
| IR: | α-Olefinic ionomer resin |
| $EVA_1$: | Modified ethylene-vinyl acetate copolymer |
| $EVA_2$: | Ethylene-vinyl acetate copolymer |
| EAA: | Ethylene-acrylic acid copolymer |
| EEA: | Ethylene-ethyl acrylate copolymer |
| PA: | Polyamide resin |
| EVOH | : Saponified ethylene-vinyl acetate copolymer |

Base compositions used for experiments

| Content of α-component | Content of PA | Content of EVOH |
|---|---|---|
| 10 wt% | 70 wt% | 20 wt% |
| 20 " | 70 " | 10 " |
| 30 " | 60 " | 10 " |

Table 7 shows results of comparing the resin composition of the invention with those of prior inventions nearest in construction to the present invention, which have been disclosed in documents

(i) to (iv),

in respect to effects (referring to details, see Example-Comparative Example 5).

As can be seen from Table 7, the composition of this invention is much superior to those of the prior inventions in the improving effect, that is, the present composition is improved to great extents in all properties relating to various drawbacks of polyamide resins and is peerless in balanced properties.

The resin composition of this invention, as already stated in detail, falls in such a blending proportion range that may be misjudged depending on the degree of mixing and failed to notice unless an intention or means of observing the mixing state is provided. Considering this, the improving effect of this invention is noteworthy as belonging to an unknown field the redevelopment of which has been accomplished with a new technical eye.

Table 7

| Composition / Bending proportion / Item evaluated | | Composition of this invention | Compositions disclosed in typical prior documents | | | | Rating of the value |
|---|---|---|---|---|---|---|---|
| | | | Document (i) | Document (ii) | Document (iii) | Document (iiii) | |
| | PA | 70 | 60 | 50 | 70 | 40 | |
| | IR | 15 | 40 | - | 2 | 40 | |
| | EVOH | 15 | - | 50 | - | 20 | |
| | PP | - | - | - | 30 | - | |
| Specific energy for extrusion | | 70 | 110 | 105 | 90 | 108 | The lower the better. |
| Drawdown of extrudate | | 50 | 60 | 130 | 110 | 90 | " |
| Stretch stress | | 60 | 70 | 90 | 100 | 70 | " |
| Oxygen permeability | | 39 | 150 | 20 | 140 | 20 | " |
| Water vapor permeability | | 53 | 30 | 130 | 60 | 50 | " |
| HAZE | | 100 | 120 | 120 | 170 | 150 | " |
| Tensile strength (absolute value) | | 90 | 50 | 40 | 70 | 30 | The high the better. |

- to be cont'd -

Table 7 (Cont'd)

| | | | | | | |
|---|---|---|---|---|---|---|
| Percentage of decrease in tensile strength under high humidity condition (cf. Table 5) | 50 | 40 | 140 | 70 | 40 | The lower the better. |
| Number of pinholes developed at low temperature | 10 | 7 | 200 | 70 | 30 | " |

Remarks:

PA: Polyamide resin

IR: α-Olefinic ionomer resin

EVOH: Saponified ethylene-vinyl acetate copolymer

PP: Polypropylene resin

Items evaluated are expressed in values relative to those of a polyamide resin measured in the ways described in the text.

The polyamide resins in the invention are synthetic linear high molecular compounds having the acid amide linkage -CONH- which include homopolyamides, copolyamides, and mixtures of these polyamides.

Examples of the homopolyamides are polycaproamide (nylon-6), polyundecanamide (nylon-11), and polydodecanelactam (nylon-12). Examples of the copolyamides are caprolactam copolymer (nylon 6/12), caprolactamhexamethylenediammonium adipate copolymer (nylon 6/66), and laurolactam-hexamethylenediammonium adipate copolymer (nylon 12/66). For the purpose of inhibiting discoloration or enhancing mechanical properties of stretch films, it is desirable to use a homopolyamide or copolyamide which has a melting point of from 190 to 240°C as measured with a DSC (differential scanning calorimeter).

The $\alpha$-olefinic ionomer resin in the invention means an ionic copolymer produced by cross-linking an $\alpha$-olefin-$\alpha,\beta$-unsaturated carboxylic acid derivative copolymer with metal ions. Suitable $\alpha$-olefins herein are, for example, ethylene and propylene, and suitable $\alpha,\beta$-unsaturated carboxylic acid derivatives include, for example, acrylic acid, methacrylic acid, itaconic acid, methyl acrylate, ethyl acrylate, methyl methacrylate, and ethyl methacrylate. Suitable metal ions for the cross-linking are those monovalent or divalent, for example, $Na^+$, $Mg^{++}$, and $Zn^{++}$.

Saponified ethylene-vinyl acetate copolymers usable in the invention are those containing 28-45 mole% of ethylene and having a saponification degree of 98% or more.

The ethylene-acrylic acid copolymer in the invention is a resin which is produced by copolymerization of ethylene with acrylic acid and has carboxyl group (-COOH) attached to methylene chains at random positions. The content of acrylic acid therein is up to 12%.

The modified ethylene-vinyl acetate copolymer in the invention is a chemically modified resin produced by graft polymerization of an acid anhydride on an ethylene-vinyl acetate copolymer containing 5 to 30% of vinyl acetate. For the acid anhydride there may be used anhydrides of unsaturated carboxylic acids typified by maleic anhydride.

Ethylene-vinyl acetate copolymers usable in the invention are those containing 10 to 40 wt% of vinyl acetate.

Evaluation items herein were measured in the following ways and rated according to the following criteria.

(1) Melting point: Using a DSC (differential scanning calorimeter, model DSC-1B, supplied by Perkin-Elmer Corp.), a standard specimen which would neither absorb nor generate heat in the predetermined temperature range was placed in one of a pair of specimen-containers in an oven and a test specimen in the other container, and the temperature of the oven was raised at a rate of 10°C/ min. to read a peak temperature on the melt curve of the test specimen, thereby determining the melting point.

(2) Oxygen permeability ($O_2TR$): Measured at 20°C and 90% R.H. in accordance with ASTM 1434-66 by using Oxtran model 100 (supplied by Mocon Co.).

The found values were ranked as follows:

| Mark | Found value (μm·cm³/m²·24 h·atm 90% RH·20°C) |
|---|---|
| ◎ | Less than 520 |
| ○ | 520 - 640 (exclusive) |
| Δ | 640 - 800 (exclusive) |
| X | 800 or more |

The humidity dependence of oxygen permeability was represented by the following value through measuring the oxygen permeability at 12% R.H.

$$\frac{(O_2TR \text{ at } 12\% \text{ R.H.}) - (O_2TR \text{ at } 90\% \text{ R.H.})}{(O_2TR \text{ at } 12\% \text{ R.H.})}$$

(3) Water vapor permeability (WVTR): Measured at 38° C and 90% R.H. in accordance with ASTM F-372 by using an automatic infrared water vapor permeability meter (model IRD-2, supplied by Mocon Co.). Unit: µm•g/m²•24 h•38° C•90% R.H.

(4) Percentage of tensile strength decrease under high humidity condition: Sample films allowed to stand at 90% R.H. and 20° C for 24 hr. and those allowed to stand at 12% R.H. and 20° C for 24 hr. were measured for tensile strength at break, and the title item was represented by the following value.

$$\frac{(\text{Tensile strength at } 12\% \text{ R.H.}) - (\text{Tensile strensth at } 90\% \text{ R.H.})}{(\text{Tensile strength at } 12\% \text{ R.H.})}$$

The tensile strength was measured in accordance with ASTM D-638.
The found values were ranked as follows:

| Mark | Found value |
|---|---|
| ◎ | Less than 0.5 |
| ○ | 0.5 - 0.6 (exclusive) |
| Δ | 0.6 - 0.7 (exclusive) |
| X | 0.7 or more |

(5) Percentage of dimensional change at normal temperature: Sample films were aged at 40° C and 90% R.H. for 24 hours. The resulting shrinkages in the longitudinal and transverse directions (LD and TD) were measured and expressed in LD-TD averaged values. When this value is low, the dimensional stability at normal temperature is regarded as good. The found values were ranked as follows:

| Mark | Found value |
|---|---|
| ○ | Less than 2% |
| Δ | 2% - 4% (exclusive) |
| X | 4% or more |

(6) Percentage of shrinkage in hot water: Sample films were dipped in 90° C hot water for 5 minutes, and the resulting LD and TD shrinkages were measured and expressed in LD-TD averaged values. The found values were ranked as follows:

| Mark | Found value |
|---|---|
| ○ | 25% or more |
| Δ | 20% - 25% (exclusive) |
| X | Less than 20% |

(7) Shrink stress in hot water: A sample film of 120 mm in length and 5 mm in width was fixed at both the ends and dipped in 90°C hot water. The resulting stress was measured and defined as the shrink stress in hot water. The found values were ranked as follows:

| Mark | Found value $N/cm^2$ ($g/mm^2$) |
|---|---|
| ○ | 270 or more |
| Δ | 250 - 270 (exclusive) |
| X | Less than 250 |

(8) Pinhole-proof property at low temperature: Numbers of pinholes produced in sample films at 5°C by using a Gelbo flex tester were measured. Each sample (20 x 28 cm), fitted in cylindrical form to the tester, was twisted to 360° degree in a tension-free state and then released therefrom. This twist-release operation was repeated 1000 times to cause flex fatigue of the film, and the number of pinholes produced was counted. The results were ranked as follows:

| Mark | Number of pinholes |
|---|---|
| ○ | 0/1000 times |
| Δ | 1-4/1000 times |
| X | 5 or more/1000 times |

(9) Haze: In accordance with ASTM 1003, the haze of each sample film was measured at 20°C and 65% R.H. by using an integral sphere type of light transmittance meter (supplied by Nihon Seimitsu Kogaku Co., Ltd.). The found values were ranked as follows:

| Mark | Found haze |
|---|---|
| ○ | Less than 5.0% |
| Δ | 5.0 - 6.0 (exclusive) % |
| X | 6.0% or more |

(10) Drawdown: Using a 40 mmØ extruder (L/D = 35), a sample resin was extruded at a screw revolution of 50 r.p.m. under conditions optimum for the resin, through an annular die (diameter of slit circle: 80 mm, slit width: 1.0 mm). While taking off the hollow parison, the diameter of the parison was measured with fixed calipers at a position 25 mm distant downward from the die. The difference between the diameter of the die slit circle and the measured diameter of the parison was defined as the degree of drawdown. That is to say, the larger this difference, the greater the drawdown.

The present invention is illustrated in more detail with reference to the following experiment examples and example-comparative examples.

Experiment Example 1

Using three resins: a polyamide resin (supplied by Toray Industries Inc. under the tradename of Amilan CM-1041), an α-olefinic ionomer resin (supplied by Mitsui Polychemical Co., Ltd. under the tradename of Himilan #1652), and a saponified ethylene-vinyl acetate copolymer (supplied by Nihon Synthetic Chemical Co., Ltd. under the tradename of Soarnol E), two blends of different compositions were prepared, one (composition ①, out of the scope of the invention) having resin blending proportions of 70:25:5 in the above order of the resins and the other (composition ②, in the scope of the invention) having resin blending proportions of 70:15:15 in the above order. These blends were melt-entruded separately by using an extruder with varying screws as shown in Table 1, Run Nos. 1, 2, and 3. The extrudates were quenched, forming 6 types of parisons each having a wall thickness of 0.4 mm. These parisons were measured for haze in the above described method. The results were as shown in Table 1.

Each of the extruded parisons corresponding to Run Nos. 1-①, 1-②, and 3-② was cut in the transverse direction to get thin annular pieces, which were then immersed in dimethylsulfoxide (DMSO) at 20°C for 24 hours. Thereafter, the pieces were washed with water, and dried, and cross-cut sections thereof were observed with an electron microscope (magnification 300). Electron microscopic photographs of these cross sections are Figs. 6, 7, and 8.

As can be seen from Table 1, the comparative composition① gave whity turbid parisons (haze values of 7 and more) independently of the mixing power of the extruder, while the composition② of the invention gave parisons of from whity turbid (haze value of 7 or more) to clear (haze value of 5 or less) depending on the mixing power of the extruder. Referring to Figs. 6, 7, and 8, the difference in the haze value is explained as follows: In the case of the comparative composition ①, areas wherefrom portions of the composition have been dissolved in DMSO (in this case, both the saponified ethylene-vinyl acetate copolymer and the α-olefinic ionomer are considered to have been dissolved) look scattered in the form of somewhat large granular depressions as shown in Fig. 6, and this dispersion state is not largely varied by the level of the mixing intensity (the photograph of this state is omitted). In the case of the composition② of the invention, in contrast, such areas as mentioned above look initially distributed in the form of streaks as shown in Fig. 7, thereby the composition being whity turbid, and then turn into fine granular forms, as shown in Fig. 8, as the mixing intensity is increased, and therefore the composition ② becomes clear.

A series of these experiments have the follow-meaning: When two composition ranges of blends of the present three component resins, which are usually considered to be good in compatibility with one another from the prior literature, in said ranges the component resins being in dispersion states represented by Figs. 6 and 7, respectively, are present closely to each other and in addition two blends lying individually in the two composition ranges are indiscernible in appearance, it is very difficult to predict the existence of a composition range of the blend which will be made clear by varying the dispersion state, in one of the above composition ranges. In other words, the composition range of the resin blend according to the

invention would not be discovered without the intention to find out a slight difference in dispersion state between resin blends similar in appearance and improve the dispersion state; Properties exhibited by the blend improved in the dispersion state of resins may be said unknown characteristics.

Experiment Example 2

From the same three resins as used in Experiment Example 1, a composition having resin blending proportions of 80:10:10 (in the scope of the invention) in the above-said order was prepared and subjected to extrusion tests using the extruder shown in Run No. 3 of Table 1 at screw revolutions of 50, 60, 70, 80, and 90 r.p.m. with the extrusion resin temperature being adjusted to 240 °C, and the specific energies (KW.h/kg) for extrusion were calculated. The results were as shown by curve I of Fig. 2. For comparison, a polyamide single resin (Amilan CM-1041) was tested under the same condition. The results were as shown by curve II of Fig. 2.

Fig. 2 indicates that the composition of the invention can be extruded with 30% less specific energy than the polyamide single resin can, under ordinary extrusion conditions (screw revolutions of about 70-80 r.p.m.) of the extruder.

The reduction of the specific extrusion energy itseif can be achieved, for instance, by raising the extrusion resin temperature to lower the viscosity of the resin under extrusion. However, this lowing of the viscosity will further increase the drawdown which is large even under ordinary conditions, so that the extrusion resin temperature is commonly set so as rather to control the drawdown.

Accordingly, for confirmation the drawdown (the diameter of the die slit circle - the diameter of the extruded tube at a definite distance downward from the die slit) was evaluated on the blend composition and the polyamide single resin in the above described manner. As a result, the polyamide single resin showed a drawdown of 35 mm while the blend composition of the invention showed a drawdown of 17 mm.

These two values verify that the extrusion conditions shown in Fig. 2 were those set by considering the control of the drawdown.

Subsequently, a number of strips each 10 mm wide, 100 mm long, and 360 μm thick were cut off from extruded unstretched sheets of both the polyamide single resin and the blend composition of the invention, and were uniaxially stretched without controlling the film width at a strain rate of 10,000%/min. to a strain of 200% (stretch ratio = 3:1) in a thermostat kept at varying temperatures of 80 °C, 90 °C, 100 °C, 110 °C, and 120 °C, to measure the stretch stress $10N/mm^2(kg/mm^2)$ in each case. Results of the measurement are shown in Fig. 3, wherein curve III is for the blend composition of the invention and curve IV for the polyamide single resin.

Fig. 3 reveals that the composition of the invention can be stretched with a stretch stress about 2/5 time as low as the polyamide resin can, at each stretch temperature.

This advantage is noteworthy as increasing the possibility of stretching processes (e.g., inflation of thick seamless tubes of small diameters) which have been virtually given up on account of the high stretch stress and as bringing about great expectations for the stretching of polyamide-based films or sheets, which has required sophisticated techniques for preventing uneven stretch.

Then further experiments were conducted to diminish the drawdown inevitable in the extrusion of resins, by treating the extrudate. That is, these experiments were intended to minimize the decrease in the diameter of the tubular parison extruded through an annular die, by cooling the parison immediately after extrusion and choosing suitable conditions of the cooling.

From these experiments it has proved that the drawdown in the case of the composition can be reduced from the original value of 17 mm to 0 mm without sacrificing the thickness uniformity or surface properties of the produced film by the cooling method of forming a water film on the parison surface about 20 mm and more distant downward from the die (the water-film cooling method).

In the case of the polyamide resin, in contrast, for example, the water-film cooling method mentioned above, when applied, resulted in a fluctuation of the parison in the vicinity of the die, thereby stable film formation being impossible. After all, it was impossible to reduce the drawdown from the original value of 35 mm to 0 mm, unless applying the cooling method of causing the inner wall of the parison to adhere to the smooth finished surface of a cooling metal mandrel.

This cooling mandrel is inserted in the tubular parison and suspended and fixed immediately under the die. The cylindrical outer surface of the mandrel is brought into contact with the whole inner circumferential surface of the tubular parison which discend at a constant speed still in a fluid state. This contact acts as an impediment to the decrease in the parison diameter and cools the parison to solidify it. Thus the mandrel is intended to stabilize the movement of the parison as a whole. Therefore, for instance, if the contact

resistance is excessive even slightly, the stable movement of the fluid parison will be disturbed. On the contray, if the contact is insufficient, the cooling will be uneven and the stable movement will also be disturbed. Moreover, the mandrel cooling tends to cause variations in the starting line of the cooling, cooling rate, and contact resistance, so that high degree techniques are required for the design, material selection, and securing the working accuracy, in the fabrication of the mandrel and in addition for setting the cooling conditions and handling of the parison at the start. It is the present situation that the mandrel cooling method is inevitably applied only when a simple cooling method such as the air cooling method or the water-film cooling method cannot be used.

Such being the case, it is of great significance that the composition of the invention permits preventing the drawdown thereof by the known simple cooling means called the water-film cooling method.

This effect seems to be attributable to such properties of the composition itself of the invention that the drawdown is small by nature, that the temperature dependence of the melt viscosity is low and that the melt film is stiff and tough.

The effects clarified above are considered to be not only applicable to film processing but also favourably exerted on various types of melt extrusion and processing thereafter which similarly include the steps of extending, stretching, and cooling-solidifying an extruded resin melt.

Example-Comparative Example 1

A polyamide resin (Amilan CM-1041), an α-olefinic ionomer resin (Himilan #1652), and a saponified ethylene-vinyl acetate copolymer (Soarnol E) in blending proportions shown in Table 4 were melt mixed through the single-screw extruder with the incorporated screw having a Dulmage portion shown in Table 1, where the extrusion temperature was 235 °C. The thus prepared resin blend was extruded by using an annular die (slit circle diameter 80 mm, slit width 1.0 mm), and quench-cooled by using a cooling-water supplying ring of 80 mm in inner diameter to form an unstretched parison (continuous). The parison was subjected to a simultaneous biaxial stretch by inflation method (stretch temperature 60 °C, stretch ratio 3 in both LD and TD), and immediately thereafter was treated with hot air for 2 seconds at a film surface temperature of 140 °C while applying tension to the film to fix the film width, thus forming an oriented film. This film was evaluated for oxygen permeability, percentage of tensile strength decrease under high humidity condition, percentage of dimensional change at normal temperature, percentage of shrinkage in hot water, shrink stress in hot water, pinhole-proof property at low temperature, and haze according to the foregoing methods. Results of the evaluation are shown in Table 2.

Fig. 1A is a diagram analyzing the results shown in Table 2. This analytical diagram was prepared by plotting the composition of each film against the collective evaluation result of the film in a triangular diagram representing the compositions of the films (the blending proportions of the polyamide resin, α-olefinic ionomer resin, and saponified ethylene-vinyl acetate copolymer in the films) and by dividing the analysis results into groups, thus clearly indicating the correlation between the collective evaluation result and the composition.

From Fig. 1A, it proves that the resin compositions satisfying the objects of the invention, that is, the compositions in film form exhibiting such properties as a low oxygen permeability, low percentage of tensile strength decrease under high humidity condition, low percentage of dimensional change at normal temperature, high percentage of shrinkage in hot water, high shrink stress in hot water, good pinhole-proof property at low temperature, and low haze value are in the triangle in Fig. 1A, i.e. the triangle bounded by the straight lines connecting point A (80, 10, 10) , point B (60, 30, 10), and point C (60, 10, 30), wherein the numbers in each parenthesis represent, from left to right, the blending proportions of the polyamide resin, α-olefinic ionomer resin, and saponified ethylene-vinyl acetate copolymer.

In other words, the blended resin compositions in the scope of the invention contain 60 to 80% by weight of the polyamide resin, 10 to 30% by weight of the α-olefinic ionomer resin, and 10 to 30% by weight of the saponified ethylene-vinyl acetate copolymer, wherein the total of the resin proportions is 100% by weight.

To achieve higher levels of the objects of the inventions, it is desirable to select resin compositions lying in the triangle bounded by the straight lines connecting point D (70, 15, 15), point E (65, 20, 15), and point F (65, 15, 20), in the triangular coordinate system of Fig. 1A. In other words, preferred blended resin compositions of the invention contain 65 to 70% by weight of the polyamide resin, 15 to 20% by weight of the α-olefinic ionomer resin, and 15 to 20% by weight of the saponified ethylene-vinyl acetate copolymer, wherein the total of the resin proportions is 100% by weight.

Example-Comparative Example 2

Stretch films were prepared in the same manner as in Example-Comparative Example 1 except that only the α-olefinic ionomer resin of the resin compositions composition Nos. 4, 8, and 10 of Table 2 was replaced by each of the resins shown in Table 3. The films were evaluated for the items shown in Table 3 and results are also shown in Table 3.

Resins used for the replacements are an ethylene-acrylic acid copolymer (supplied by Mitsubishi Yuka Co., Ltd. under the tradename of Yukalon A 221 M, acrylic acid content 8.5%), modified ethylene-vinyl acetate copolymer (ethylene-vinyl acetate copolymer on which maleic anhydride is grafted) (supplied by Mitsui Polychemical Co., Ltd. under the tradename of Admer VE 205), ethylene-vinyl acetate copolymer (supplied by Mitsui Polychemical Co., Ltd. under the tradename of Evaflex 260, vinyl acetate content 28 wt%), and ethylene-ethyl acrylate copolymer (supplied by Nippon Unicar Co., Ltd. under the tradename of NUC Copolymer NUC 6220).

Table 3 indicates that resins which can replace the α-olefinic ionomer resin are the ethylene-acrylic acid copolymer, modified ethylene-vinyl acetate copolymer, ethylene-vinyl acetate copolymer, and mixtures of these resins. However, the complete replacement of the α-olefinic ionomer resin with any of these resins gives no satisfactory composition. It is necessary to keep a certain part of the α-olefinic ionomer resin. Based on these results, Fig. 1A was revised to draw Fig. 1B.

Figs. 1A and 1B cojointly represent an important part of the appended claims.

Table 3 indicates that the amount of the α-olefinic ionomer resin to be replaced by any of said other resins (i.e. the ethylene-acrylic acid copolymer, modified ethylene-vinyl acetate copolymer, ethylene-vinyl acetate copolymer, and mixtures of these resins) is desirably less than 30% by weight of the original amount of the α-olefinic ionomer resin, and that the amount of any of the other resins to be substituted for a part of the α-olefinic ionomer resin is desirably up to 8.0% by weight of the total weight of the resin composition.

Example-Comparative Example 3

Stretch films were prepared in the same manner as in Example-Comparative Example 1 from the resin compositions composition No. 1 (polyamide single resin, comparative sample) and No. 4 (composition of the invention) of Table 2.

The point aimed at in this case is to subject stretched films to heat set at varying temperatures (from 100 °C to 190 °C with increment of 10 °C) (the treatment time was varied and the treatment temperatures were confirmed by measuring the film surface temperatures) and to observe effects of the heat set temperature on film properties.

The prepared films were evaluated for percentage of shrinkage in 90 °C hot water and percentage of dimensional change at normal temperature. Results thereof are summarized in Table 4, wherein the two properties of each film are shown for each treatment temperature.

Table 4

| Composition No. / Evaluation item / Treatment temperature (°C) | 4 Polyamide 80%, Ionomer resin 10%, Saponified ethylene-vinyl acetate copolymer 10% | | 1 (Polyamide 100%) | |
|---|---|---|---|---|
| | % dimensional change at normal temperature | % shrinkage in hot water | % dimensional change at normal temperature | % shrinkage in hot water |
| 100 | △ | ○ | X | ○ |
| 110 | ○ | ○ | X | ○ |
| 120 | ○ | ○ | X | ○ |
| 130 | ○ | ○ | X | ○ |
| 140 | ○ | ○ | X | ○ |
| 150 | ○ | △ | X | ○ |
| 160 | ○ | △ | X | ○ |
| 170 | ○ | △ | △ | △ |
| 180 | ○ | △ | ○ | △ |
| 190 | ○ | △ | ○ | △ |

Fig. 4 is a graph drawn by using the data shown in Table 4. The heat treatment temperature was plotted as abscissa, the percentage shrinkage of the obtained film in hot water as left ordinate, and the percentage dimensional change of the obtained film at normal temperature as right ordinate, so as to show relations between the heat treatment temperature and the found value of each property. The solid line is for composition No. 4 (composition of the invention) and the broken line for composition No. 1 (polyamide single resin).

Fig. 4 indicates that the above properties of the resulting films can be controlled by manipulating heat treatment conditions in cases of both the composition of the invention and the polyamide single resin, and that both resins tend to lower the percentage of film shrinkage in hot water as the percentage of film dimensional change at normal temperature is reduced (dimensional stability is improved). Thus it proves difficult to produce a film exhibiting a high percentage of shrinkage in hot water and additionally a low percentage of dimensional change.

However, the composition of the invention is superior in that the percentage of shrinkage in hot water decreases more mildly with the increase in the heat set temperature and the percentage of dimensional change is on a lower level. It is easy under certain conditions to obtain from the composition of the invention films which exhibit relatively high percentages of shrinkage in hot water (market demand value: at least 26%) while keeping the percentage of dimensional change at values of up to 2% (market demand value). This advantage is notable in that it is a characteristic unattainable hitherto by any of polyamide resins.

In other words, this characteristic means that it is possible to produce freely various stretch films from heat shrinkable to non-shrinkable while keeling the percentage of dimensional change at normal temperature on relatively low level (good dimensional stability) by controlling a series of stretch-heat set conditions.

Further, the films formed from both the composition of the invention and the polyamide single resin were measured for Oxygen Transmission Rate ($O_2TR$), Water Vapor Transmission Rate (WVTR), and tensile strength. The results are summarized in Table 5. Regarding $O_2TR$ and tensile strength, in Table 5, both the value under normal measurement conditions and the percentage of decrease with humidity increase are shown.

It can been seen from Table 5 that the film of the present composition, as compared with the film of the polyamide resin, exhibits low $O_2TR$ and WVTR values, thus being superior in gas barrier properties, and is prevented from the increase in $O_2TR$ (deterioration of the oxygen barrier property) at high temperatures. As regards tensile strength, the film of the present composition is not necessarily superior in the value itself but is prevented from the decrease in the value under high humidity conditions, therefore being superior ultimately.

The above results well represent characteristics of the film of the present composition.

Example-Comparative Example 4

Shrink films were prepared through the steps of extrusion, stretch, and heat setting similar to those in Example-Comparative Example 1 except for changing the blending proportions of the polyamide resin, $\alpha$-olefinic ionomer resin, and saponified ethylene-vinyl acetate copolymer to 68:17:15.

Three types of commercial polyamide or polyamide-based shrink packaging films in use today for food package were purchased, and these four types of films were evaluated in the foregoing manner. The results are summarized in Table 6. In addition, percentages of shrinkage in hot water at 65° to 100°C were determined on these four types of films, and shown in Fig. 5 so as to make clear the dependence thereof on temperature.

As is evident from Table 6, the film formed of the blended resin composition according to the invention, as compared with the existing commercial polyamide type films, is by no means inferior but superior in oxygen barrier property independency of tensile strength on humidity, pinhole-proof property at low temperature, and clarity and excellent particularly in dimensional stability at normal temperature and percentage of shrinkage in hot water.

From Fig. 5, it can be seen that the film of the present composition is featured by exhibiting high percentages of heat shrinkage over a wide range of temperatures, specially at lower temperatures.

Consequently, the film of the present composition is particularly useful in application field wherein low-temperature shrinkability is required, for example, the field of stretch packaging of foods such as fresh meats, processed meats, and the like.

Example-Comparative Example 5

Using three resins as used in Example-Comparative Example 1 and a polypropylene resin (supplied by Sumitomo Chem. Ind. Co., Ltd. under the tradename of Sumitomo Noblen H501) as base resins, compositions as described in Japanese Patent Application Laid-Open Nos. 146758/81 (prior document (i)), 16576/79

(prior document (ii)) and

167751/81 (prior document (iii))

and Japanese Patent Publication No. 33425/81

(prior document (iv))

were prepared and formed into films to compare with the film of the composition according to the invention.

The blending proportions in each composition were as shown in Table 7. In the same manner as in Experiment Example 2 and Example-Comparative Example 1, biaxially stretched films were prepared so as to give a thickness of 40 μ and a stretch ratio of 3:1 in both machine and transverse directions, and properties of these films were compared. The results are summarized in in Table 7.

Among the evaluation items shown in Table 7, the specific energy for extrusion, drawdown of extrudate, and stretch stress during stretch were measured in the course of experiments in the same manner as in Experiment Example 2, and the oxygen permeability and the other items shown thereunder in Table 7 were measured on each film as described before. For the convenience of comparison, values in Table 7 are expressed in relative values to the found values on the film of the polyamide single resin with these value taken as standards (100).

In these comparative experiments, the matter first aware of is difficulties in film formation from the compositions of

(iii) and (iv),

that is, the setting of stretch conditions for stable film formation was so difficult that films for evaluation were obtained at last.

Table 7 proves that the composition of the invention is most effective in improvements of properties of polyamide resins relating to various drawbacks thereof, i.e. great specific energy and drawdown in extrusion, high oxygen and water permeabilities, much decrease in tensile strength with humidity increase, and liability to develop pinholes at low temperatues, all to high levels while retaining superior properties (e.g. clarity and tensile strength) of polyamide resins. These favorable properties of the present composition are hitherto unknown and have been developed first by the present inventors. The film formed from the composition of

(iv),

having low shrink stress and bursting strength, was by no means a product usable in shrink package of foods.

[EFFECT OF THE INVENTION]

As described in detail hereinbefore, the blended resin composition of the invention, having the foregoing

blending proportions, as compared with existing polyamide resins, requires low specific energy for extrusion, exhibits low stretch stress in stretching, and gives films improved in gas barrier properties. These advantages indicate that the resin composition of the invention can be applied to known various types of extrusion processing.

For instance, the composition is beneficial when used for extrusion film formation, since the drawdown is small and this difficulty can be readily solved. Moreover, when used for stretch polyamide film production by the inflation system, which has hitherto been regarded as difficult to practice because of the high stretch stress, facilitates the operation and expands the production latitude in this field.

Further, the composition, when applied to common stretch process, permits producing films which exhibit large shrinkage in hot water and simultaneously small dimensional change at normal temperature, films which are good in low temperature shrinkability, or films which do not have shrinkability and exhibit small dimensional change at normal temperature, that is, good dimensional stability.

Another characteristic of the composition is to give films improved so as to have low dependence of mechanical strengths and of gas barrier properties on humidity. This characteristic is notable as spreading cojointly with the good gas barrier property ($O_2TR$, WVTR) and the clarity being kept on high levels, the field of polyamide application to melt-extrusion forming products to a large extent.

## Claims

1. A polyamide-based blended resin composition consisting of 80 to 60 % by weight of a polyamide resin, 10 to 30 % by weight of a saponified ethylene-vinyl acetate copolymer containing 28 to 45 mole % ethylene units and having a saponification degree of 98 % or more, and 10 to 30 % by weight of either an $\alpha$-olefinic ionomer resin produced by cross-linking an $\alpha$-olefin-$\alpha,\beta$-unsaturated carboxylic acid derivative copolymer with metal ions or a mixture composed of such $\alpha$-olefinic ionomer resin as the main component and at least one resin selected from ethylene-acrylic acid copolymer resins having an acrylic acid content up to 12 %, modified ethylene-vinyl acetate copolymer resins produced by graft polymerization of an acid anhydride on ethylene-vinyl acetate copolymer containing 5 to 30 % of vinyl-acetate, and ethylene-vinyl acetate copolymer resins having a vinyl-acetate content 10 to 40 % by weight, where the total of the resin proportions is 100 % by weight.

2. The blended resin composition of Claim 1, wherein the resin blending proportions based on the total resin amount of 100 are 65 to 70% by weight of a polyamide resin, 15 to 20% by weight of a saponified ethylene-vinyl acetate copolymer, and 15 to 20% by weight of either an $\alpha$-olefinic ionomer resin or a mixture composed of an $\alpha$-olefinic ionomer resin as the main component and at least one resin selected from ethylene-acrylic acid copolymer resins, modified ethylene-vinyl acetate copolymer resins, and ethylene-vinyl acetate copolymer resins.

3. The blended resin composition of Claim 1 or 2, wherein the mixture composed of an $\alpha$-olefinic ionomer resin contains at least 70% by weight of the $\alpha$-olefinic ionomer resin and the amount of the at least one resin selected from ethylene-acrylic acid copolymer resins, modified ethylene-vinyl acetate copolymer resins, and ethylene-vinyl acetate copolymer resins is up to 8% by weight based on the total weight of the resins contained in the composition.

4. The blended resin composition of Claim 1, 2, or 3, wherein the haze of a plate of 0.4 mm in the total thickness formed of the composition is up to 5% as measured at 20 °C and 65% R.H. (relative humidity) in accordance with ASTM 1003.

5. A formed article produced by melt-extrusion processing of a polyamide-based blended resin composition consisting
of 80 to 60 % by weight of a polyamide resin, 10 to 30 % by weight of a saponified ethylene-vinyl acetate copolymer containing 28 to 45 mole % ethylene units and having a saponification degree of 98 % or more, and 10 to 30 % by weight of either an $\alpha$-olefinic ionomer resin produced by cross-linking an $\alpha$-olefin-$\alpha,\beta$-unsaturated carboxylic acid derivative copolymer with metal ions or a mixture composed of such $\alpha$-olefinic ionomer resin as the main component and at least one resin selected from ethylene-acrylic acid copolymer resins having an acrylic acid content up to 12 %, modified ethylene-vinyl acetate copolymer resins produced by graft polymerization of an acid anhydride on ethylene-vinyl

acetate copolymer containing 5 to 30 % of vinyl-acetate, and ethylene-vinyl acetate copolymer resins having a vinyl-acetate content 10 to 40 % by weight, where the total of the resin proportions is 100 % by weight.

**6.** The extrusion formed article of Claim 5, wherein the resin blending proportions based on the total resin amount of 100 are 65 to 70% by weight of a polyamide resin, 15 to 20% by weight of a saponified ethylene-vinyl acetate copolymer, and 15 to 20% by weight of either an α-olefinic ionomer resin or a mixture composed of an α-olefinic ionomer resin as the main component and at least one resin selected from ethylene-acrylic acid copolymer resins, modified ethylene-vinyl acetate copolymer resins, and ethylene-vinyl acetate copolymer resins.

**7.** The extrusion formed article of claim 5 or 6, wherein the mixture composed of an α-olefinic ionomer resin as the main component contains at least 70% by weight of the α-olefinic ionomer resin and the amount of the at least one resin selected from ethylene-acrylic acid copolymer resins, modified ethylene-vinyl acetate copolymer resins, and ethylene-vinyl acetate copolymer resins is up to 8% by weight based on the total weight of the resins contained in the composition.

**8.** The extrusion formed article of claim 5, 6, or 7, which is a film.

**9.** The film of claim 8, the haze of which is up to 5% as measured at 20° C and 65% R.H. in accordance with ASTM 1003.

**10.** The film of claim 8, the oxygen permeability of which is less than 520 $\mu m.cm^3/m^2$, 24 hr. 1.013 bar, 90% RH• 20° C as measured in accordance with ASTM 1434.

**11.** The film of claim 8, the tensile strength of which exhibit a humidity dependence index of less than 0.5, said index being represented by the formula

Index = (Tensile strength at 12% R.H.) - (Tensile strength at 90% R.H.)/(Tensile strength at 12% R.H.).

## Revendications

**1.** Composition de résines mélangées, à base de polyamide, consistant en 80 à 60 % en poids d'une résine de polyamide, en 10 à 30 % en poids d'un copolymère saponifié d'éthylène et d'acétate de vinyle contenant de 28 à 45 % en mole de motifs d'éthylène et ayant un degré de saponification de 98 % ou supérieur à 98 %, et en 10 à 30 % en poids soit d'une résine α-oléfinique ionomère préparée en réticulant un copolymère dérivé d'une α-oléfine et d'un acide carboxylique α,β insaturé par des ions métalliques, soit d'un mélange composé d'une telle résine α-oléfinique ionomère comme constituant principal, et d'au moins une résine choisie parmi les résines de copolymères d'éthylène et d'acide acrylique ayant une teneur en acide acrylique allant jusqu'à 12 %, les résines modifiées de copolymères d'éthylène et d'acétate de vinyle, préparées par polymérisation par greffage d'un anhydride d'acide sur un copolymère d'éthylène et d'acétate de vinyle contenant de 5 à 30 % d'acétate de vinyle, et les résines de copolymères d'éthylène et d'acétate de vinyle ayant une teneur en acétate de vinyle de 10 à 40 % en poids, le total des proportions de résines étant de 100 % en poids.

**2.** Composition de résines mélangées suivant la revendication 1, dans laquelle les proportions de mélange des résines, par rapport à la quantité totale de résine de 100, sont de 65 à 70 % en poids d'une résine de polyamide, de 15 à 20 % en poids d'un copolymère saponifié d'éthylène et d'acétate de vinyle et de 15 à 20 % en poids soit d'une résine α-oléfinique ionomère, soit d'un mélange composé d'une résine α-oléfinique ionomère comme constituant principal et d'au moins une résine choisie parmi les résines de copolymères d'éthylène et d'acide acrylique, les résines modifiées de copolymères d'éthylène et d'acétate de vinyle et les résines de copolymères d'éthylène et d'acétate de vinyle.

**3.** Composition de résines mélangées suivant la revendication 1 ou 2, dans laquelle le mélange composé d'une résine α-oléfinique ionomère contient au moins 70 % en poids de la résine α-oléfinique ionomère et la quantité de ladite au moins une résine choisie parmi les résines de copolymères d'éthylène et d'acide acrylique, les résines modifiées de copolymères d'éthylène et d'acétate de vinyle et les résines

de copolymères d'éthylène et d'acétate de vinyle, représente jusqu'à 8 % du poids total des résines contenues dans la composition.

4. Composition de résines mélangées suivant la revendication 1, 2 ou 3, dans laquelle la turbidité d'une plaque de 0,4 mm d'épaisseur totale, en la composition, représente jusqu'à 5 %, telle que mesurée à 20 °C et sous une humidité relative de 65 % suivant la norme ASTM 1003.

5. Objet moulé préparé par un traitement par extrusion à l'état fondu d'une composition de résines mélangées à base de polyamide consistant en 80 à 60 % en poids d'une résine de polyamide, en 10 à 30 % en poids d'un copolymère saponifié d'éthylène et d'acétate de vinyle contenant de 28 à 45 % en mole de motifs d'éthylène et ayant un degré de saponification de 98 % ou supérieur à 98 %, et en 10 à 30 % en poids soit d'une résine $\alpha$-oléfinique ionomère préparée en réticulant un copolymère dérivé d'une $\alpha$-oléfine et d'un acide carboxylique $\alpha,\beta$ insaturé par des ions métalliques, soit d'un mélange composé d'une telle résine $\alpha$-oléfinique ionomère comme constituant principal, et d'au moins une résine choisie parmi les résines de copolymères d'éthylène et d'acide acrylique ayant une teneur en acide acrylique allant jusqu'à 12 %, les résines modifiées de copolymères d'éthylène et d'acétate de vinyle, préparées par polymérisation par greffage d'un anhydride d'acide sur un copolymère d'éthylène et d'acétate de vinyle contenant de 5 à 30 % d'acétate de vinyle et les résines de copolymères d'éthylène et d'acétate de vinyle ayant une teneur en acétate de vinyle de 10 à 40 % en poids, le total des proportions de résines étant de 100 % en poids.

6. Objet moulé par extrusion suivant la revendication 5, dans lequel les proportions de mélange des résines par rapport à la quantité totale de résine de 100 sont de 65 à 70 % en poids d'une résine de polyamide, de 15 à 20 % en poids d'un copolymère saponifié d'éthylène et d'acétate de vinyle et de 15 à 20 % en poids soit d'une résine $\alpha$-oléfinique ionomère, soit d'un mélange composé d'une résine $\alpha$-oléfinique ionomère comme constituant principal, et d'au moins une résine choisie parmi les résines de copolymères d'éthylène et d'acide acrylique, les résines modifiées de copolymères d'éthylène et d'acétate de vinyle et les résines de copolymères d'éthylène et d'acétate de vinyle.

7. Objet moulé par extrusion suivant la revendication 5 ou 6, dans lequel le mélange composé d'une résine $\alpha$-oléfinique ionomère contient au moins 70 % en poids de la résine $\alpha$-oléfinique ionomère et la quantité de ladite au moins une résine choisie parmi les résines de copolymères d'éthylène et d'acide acrylique, les résines modifiées de copolymères d'éthylène et d'acétate de vinyle, et les résines de copolymères d'éthylène et d'acétate de vinyle, représente jusqu'à 8 % du poids total des résines contenues dans la composition.

8. Objet moulé par extrusion suivant la revendication 5, 6 ou 7, qui est une pellicule.

9. Pellicule suivant la revendication 8, dont la turbidité atteint jusqu'à 5 %, telle que mesurée à 20 °C et sous une humidité relative de 65 % suivant la norme ASTM 1003.

10. Pellicule suivant la revendication 8, dont la perméabilité à l'oxygène est inférieure à 520 $\mu$m.cm$^3$/m$^2$, 24 heures. 1,013 bar, à 90 % d'humidité relative et à 20 °C, telle que mesurée suivant la norme ASTM 1434.

11. Pellicule suivant la revendication 8, dont la résistance à la traction présente un indice de dépendance en fonction de l'humidité inférieur à 0,5, cet indice étant représenté par la formule

Indice = (résistance à la traction à 12 % d'humidité relative) - (résistance à la traction à 90 % d'humidité relative)/(résistance à la traction à 12 % d'humidité relative).

**Ansprüche**

1. Gemischte Harzzusammensetzung auf Basis von Polyamid, bestehend aus 80 bis 60 Gew.-% Polyamidharz, 10 bis 30 Gew.-% verseiftem Ethylen-Vinylacetat-Copolymer, das 28 bis 45 Mol-% Ethyleneinheiten enthält und einen Verseifungsgrad von 98 % oder mehr aufweist, und 10 bis 30 Gew.-% entweder eines $\alpha$-Olefin-Ionomerharzes, erzeugt durch Vernetzung eines $\alpha$-Olefin-$\alpha,\beta$-ungesättigten

Carbonsäurederivat-Copolymeren mit Metallionen, oder eines Gemisches, zusammengesetzt aus einem solchen α-Olefin-Ionomer-Harz als Hauptbestandteil und mindestens einem Harz, ausgewählt aus Ethylen-Acrylsäure-Copolymerharzen mit einem Acrylsäuregehalt von bis zu 12 %, modifizierten Ethylen-Vinylacetat-Copolymerharzen, hergestellt durch Pfropfpolymerisation eines Säureanhydrids auf Ethylen-Vinylacetat-Copolymer, das 5 bis 30 % Vinylacetat enthält, und Ethylen-Vinylacetat-Copolymerharzen mit einem Vinylacetatgehalt von 10 bis 40 Gew.-%, wobei die Gesamtmenge der Harzanteile 100 Gew.-% ausmacht.

**2.** Gemischte Harzzusammensetzung nach Anspruch 1, wobei die Harzmischungsanteile, bezogen auf eine Gesamtharzmenge von 100, 65 bis 70 Gew.-% Polyamidharz, 15 bis 20 Gew.-% eines verseiften Ethylen-Vinylacetat-Copolymeren und 15 bis 20 Gew.-% entweder eines α-Olefin-Ionomerharzes oder eines Gemisches, zusammengesetzt aus einem α-Olefin-Ionomerharz als Hauptbestandteil und mindestens einem Harz, ausgewählt aus Ethylen-Acrylsäure-Copolymerharzen, modifizierten Ethylen-Vinylacetat-Copolymerharzen und Ethylen-Vinylacetat-Copolymerharzen, ausmachen.

**3.** Gemischte Harzzusammensetzung nach Anspruch 1 oder 2, wobei das aus einem α-Olefin-Ionomerharz zusammengesetzte Gemisch mindestens 70 Gew.-% des α-Olefin-Ionomerharzes enthält und die Menge an dem zumindest einen Harz, das aus Ethylen-Acrylsäure-Copolymerharzen, modifizierten Ethylen-Vinylacetat-Copolymerharzen und Ethylen-Vinylacetat-Copolymerharzen ausgewählt ist, bis zu 8 Gew.-% beträgt, bezogen auf das Gesamtgewicht der in dem Gemisch enthaltenen Harze.

**4.** Gemischte Harzzusammensetzung nach Anspruch 1, 2 oder 3, wobei die Trübung einer aus der Zusammensetzung gebildeten Platte von 0,4 mm Gesamtdicke, gemessen bei 20°C und 65 % relativer Feuchte gemäß ASTM 1003, bis zu 5 % beträgt.

**5.** Formling, hergestellt durch Schmelzextrusionsverarbeitung einer gemischten Harzzusammensetzung auf Basis von Polyamid, bestehend aus 80 bis 60 Gew.-% Polyamidharz, 10 bis 30 Gew.-% eines verseiften Ethylen-Vinylacetat-Copolymeren, das 28 bis 45 Mol-% Ethyleneinheiten enthält und einen Verseifungsgrad von 98 % oder mehr aufweist, und 10 bis 30 Gew.-% entweder eines α-Olefin-Ionomerharzes, hergestellt durch Vernetzung eines α-Olefin-α,β-ungesättigten Carbonsäurederivat-Copolymeren mit Metallionen, oder eines Gemisches, zusammengesetzt aus einem solchen α-Olefin-Ionomerharz als Hauptbestandteil und mindestens einem Harz, ausgewählt unter Ethylen-Acrylsäure-Copolymerharzen mit einem Acrylsäuregehalt von bis zu 12 %, modifizierten Ethylen-Vinylacetat-Copolymerharzen, hergestellt durch Pfropfpolymerisation eines Säureanhydrids auf Ethylen-Vinylacetat-Copolymer, das 5 bis 30 % Vinylacetat enthält, und Ethylen-Vinylacetat-Copolymerharzen mit einem Vinyl-acetatgehalt von 10 bis 40 Gew.-%, wobei die Gesamtmenge der Harzanteile 100 Gew.-% ausmacht.

**6.** Extrusionsformling nach Anspruch 5, wobei die Harzmischungsanteile, bezogen auf eine Gesamtharzmenge von 100, 65 bis 70 Gew.-% Polyamidharz, 15 bis 20 Gew.-% eines verseiften Ethylen-Vinylacetat-Copolymeren und 15 bis 20 Gew.-% entweder eines α-Olefin-Ionomerharzes oder eines Gemisches, zusammengesetzt aus einem α-Olefin-Ionomerharz als Hauptbestandteil und mindestens einem Harz, ausgewählt unter Ethylen-Acrylsäure-Copolymerharzen, modifizierten Ethylen-Vinylacetat-Copolymerharzen und Ethylen-Vinylacetat-Copolymerharzen, ausmachen.

**7.** Extrusionsformling nach Anspruch 5 oder 6, wobei das aus einem α-Olefin-Ionomerharz als Hauptbestandteil zusammengesetzte Gemisch mindestens 70 Gew.-% des α-Olefin-Ionomerharzes enthält und die Menge an dem mindestens einen Harz, ausgewählt aus Ethylen-Acrylsäure-Copolymerharzen, modifizierten Ethylen-Vinylacetat-Copolymerharzen und Ethylen-Vinylacetat-Copolymerharzen, bis zu 8 Gew.-% beträgt, bezogen auf das Gesamtgewicht der in dem Gemisch enthaltenen Harze.

**8.** Extrusionsformling nach Anspruch 5, 6, oder 7, der eine Folie ist.

**9.** Folie nach Anspruch 8, deren Trübung bis zu 5 % beträgt, gemessen bei 20°C und 65 % relativer Feuchte gemäß ASTM 1003.

**10.** Folie nach Anspruch 8, deren Sauerstoffdurchlässigkeit, gemessen gemäß ASTM 1434, weniger als 520 $\mu m \cdot cm^3/m^2$, 24 h, 1,013 bar, 90 % relative Feuchte, 20°C, beträgt.

11. Folie nach Anspruch 8, deren Zugfestigkeit einen Feuchtigkeitsabhängigkeitsindex von weniger als 0,5 aufweist, wobei dieser Index durch die Formel

Index = (Zugfestigkeit bei 12 % relativer Feuchte) - (Zugfestigkeit bei 90 % relativer Feuchte) / (Zugfestigkeit bei 12 % relativer Feuchte)

repräsentiert wird.

FIG. 1A

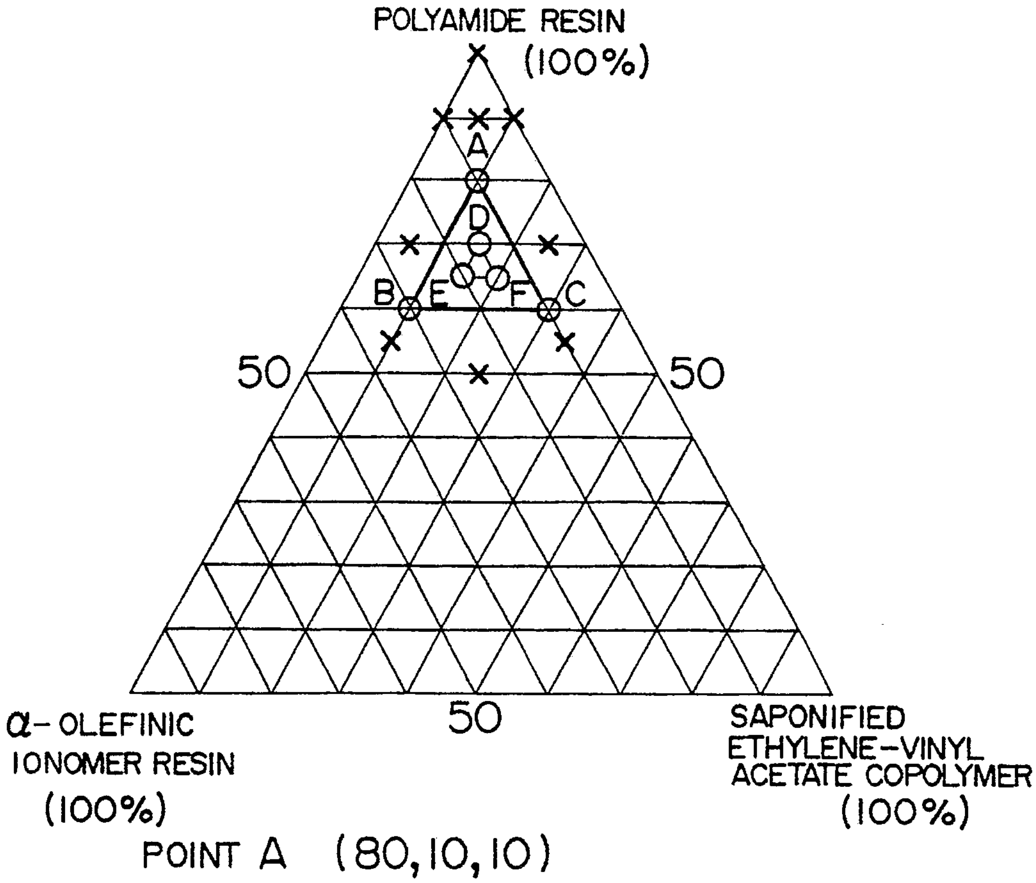


POINT A (80,10,10)

POINT B (60,30,10)

POINT C (60,10,30)

POINT D (70,15,15)

POINT E (65,20,15)

POINT F (65,15,20)

FIG. 1B

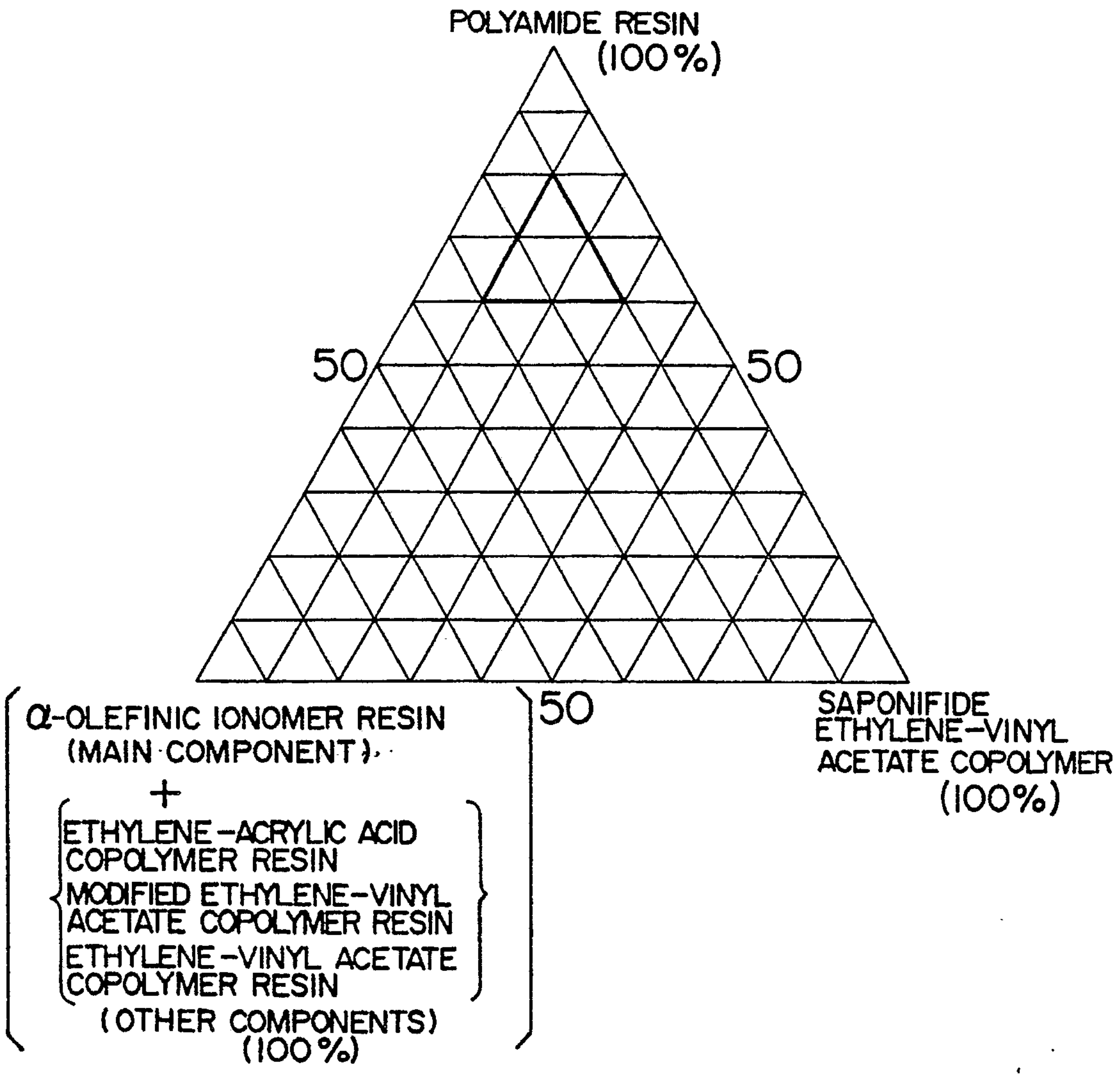
POLYAMIDE RESIN
(100%)
50
50
50
α-OLEFINIC IONOMER RESIN
(MAIN COMPONENT)
+
ETHYLENE-ACRYLIC ACID
COPOLYMER RESIN
MODIFIED ETHYLENE-VINYL
ACETATE COPOLYMER RESIN
ETHYLENE-VINYL ACETATE
COPOLYMER RESIN
(OTHER COMPONENTS)
(100%)
SAPONIFIDE
ETHYLENE-VINYL
ACETATE COPOLYMER
(100%)

FIG. 2

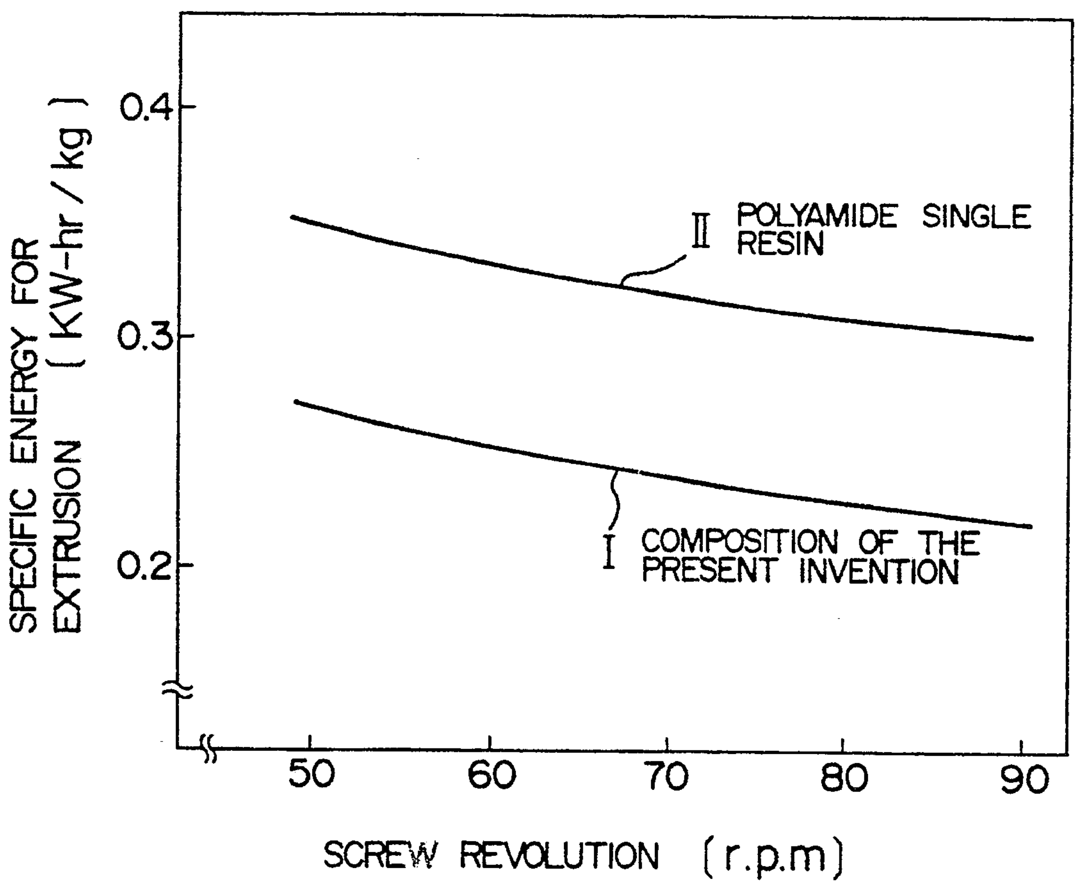
SPECIFIC ENERGY FOR EXTRUSION (KW-hr / kg)
0.4
0.3
0.2
II POLYAMIDE SINGLE RESIN
I COMPOSITION OF THE PRESENT INVENTION
50
60
70
80
90
SCREW REVOLUTION (r.p.m)

FIG. 3

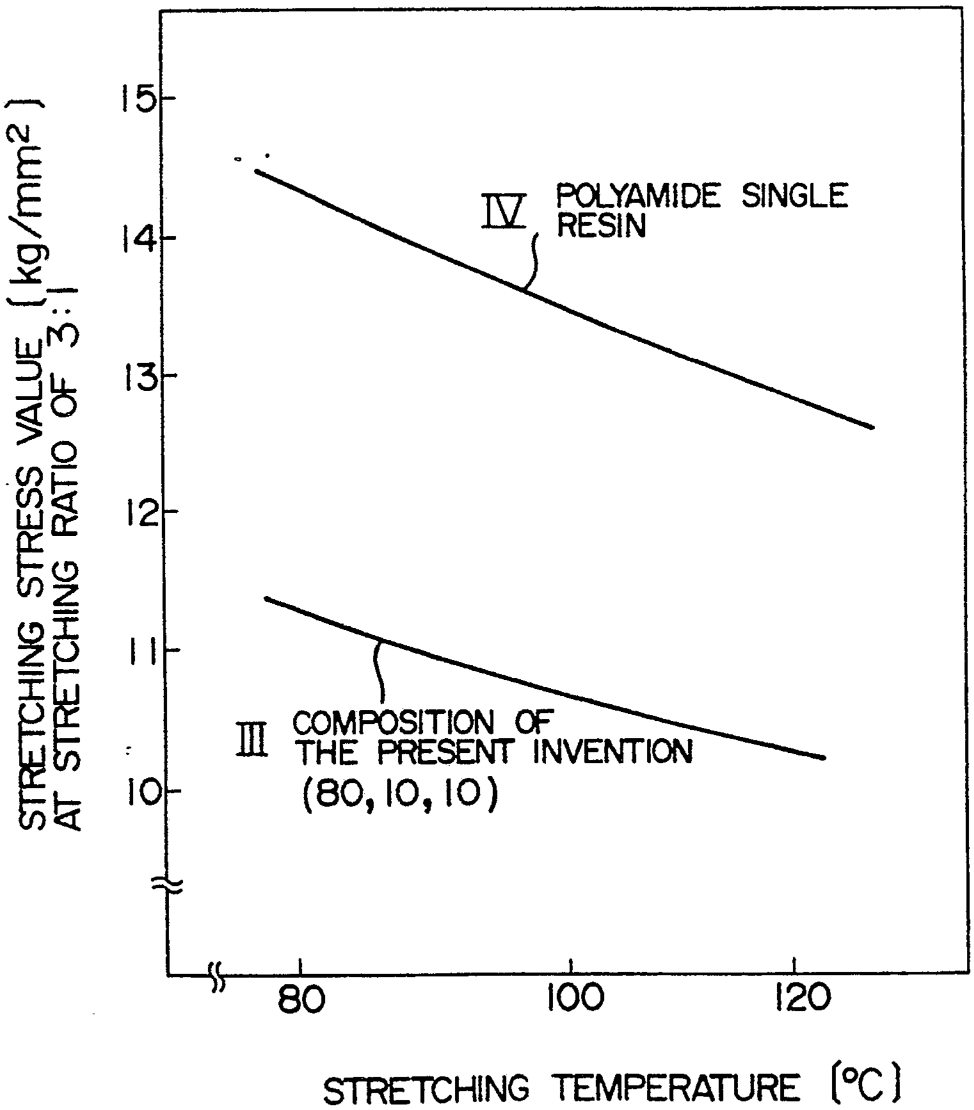
STRETCHING STRESS VALUE (kg/mm2)
AT STRETCHING RATIO OF 3:1
15
14
13
12
11
10
IV POLYAMIDE SINGLE RESIN
III COMPOSITION OF THE PRESENT INVENTION
(80, 10, 10)
80
100
120
STRETCHING TEMPERATURE (°C)

FIG. 4

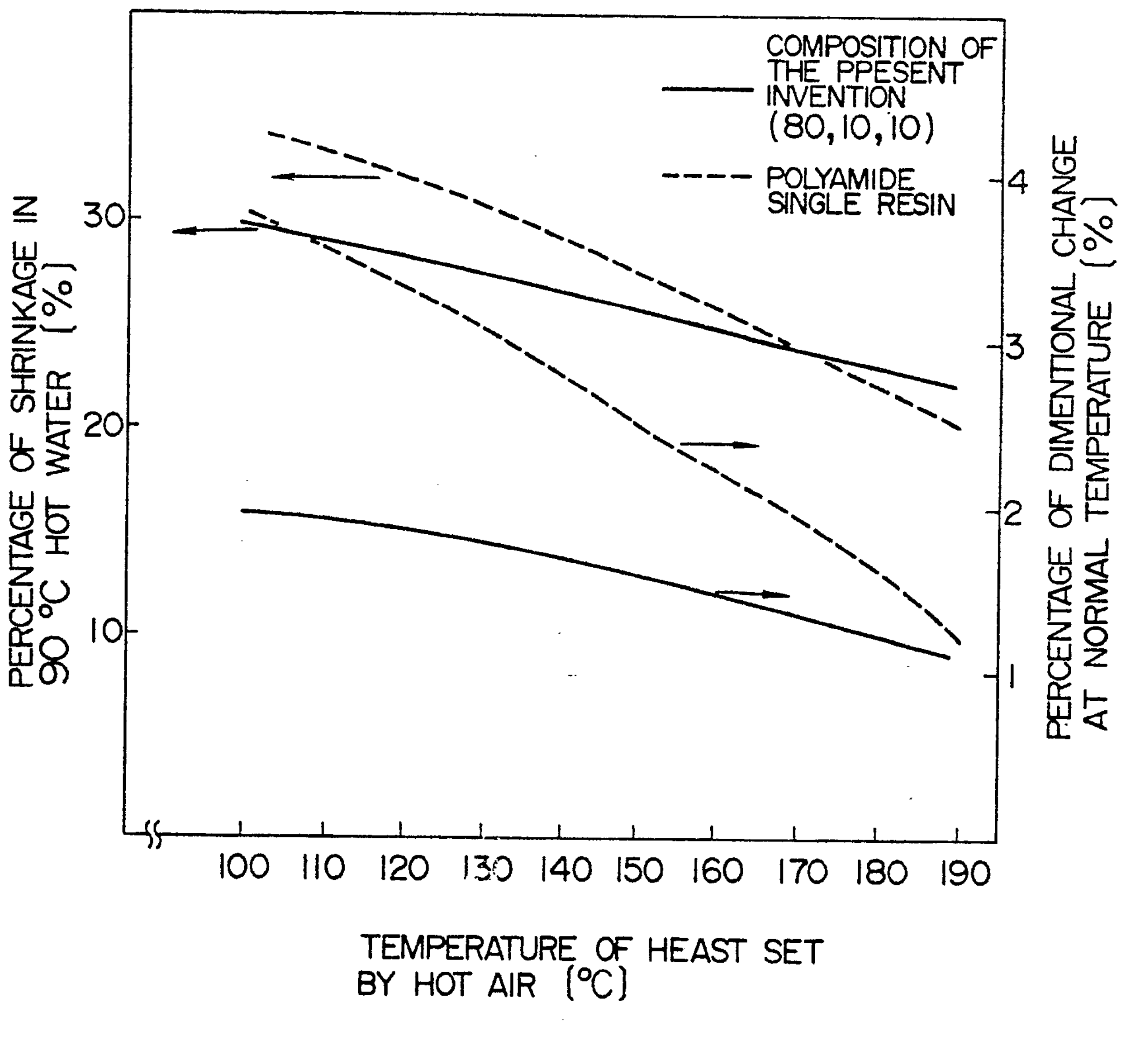
COMPOSITION OF THE PPESENT INVENTION (80,10,10)
POLYAMIDE SINGLE RESIN
PERCENTAGE OF SHRINKAGE IN 90 °C HOT WATER [%]
30
20
10
PERCENTAGE OF DIMENTIONAL CHANGE AT NORMAL TEMPERATURE [%]
4
3
2
1
100 110 120 130 140 150 160 170 180 190
TEMPERATURE OF HEAST SET BY HOT AIR [°C]

FIG. 5

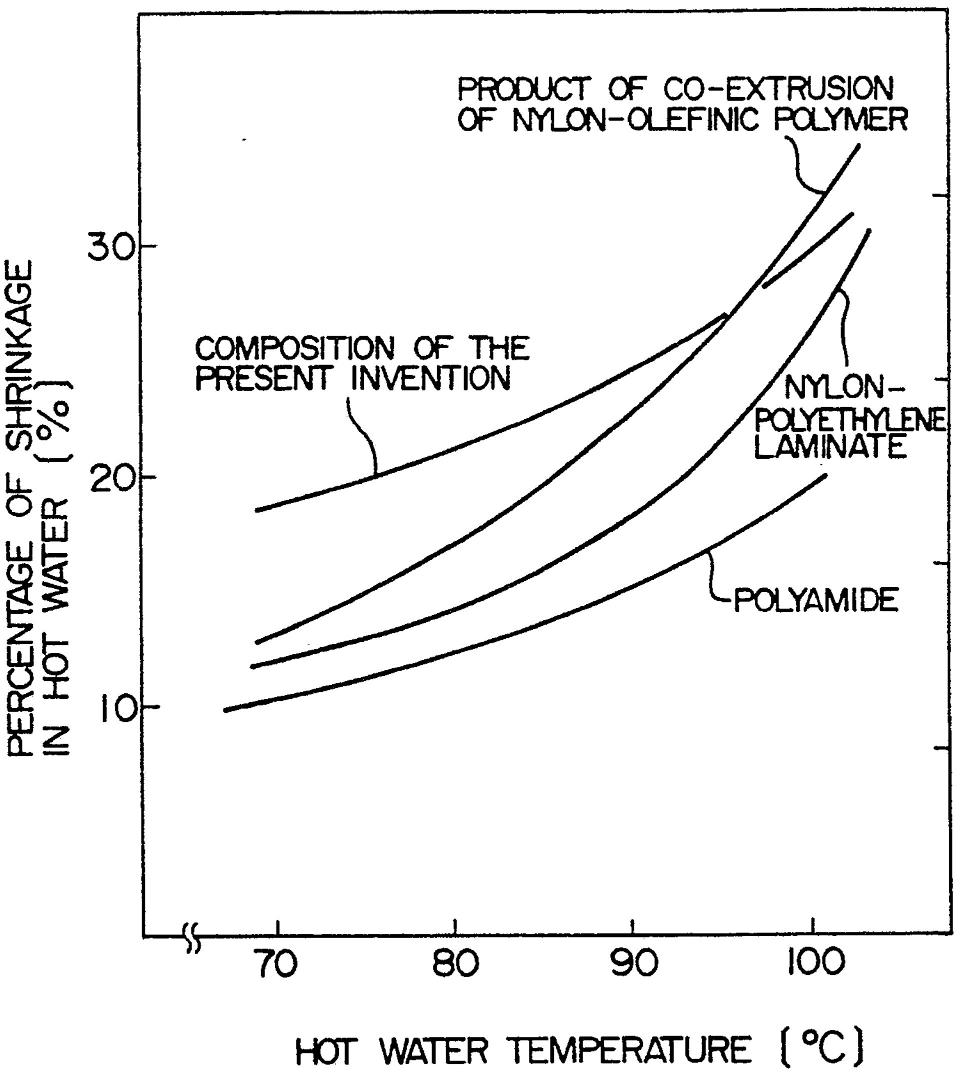
PRODUCT OF CO-EXTRUSION OF NYLON-OLEFINIC POLYMER
COMPOSITION OF THE PRESENT INVENTION
NYLON-POLYETHYLENE LAMINATE
POLYAMIDE
PERCENTAGE OF SHRINKAGE IN HOT WATER [%]
30
20
10
70
80
90
100
HOT WATER TEMPERATURE [°C]

FIG. 6

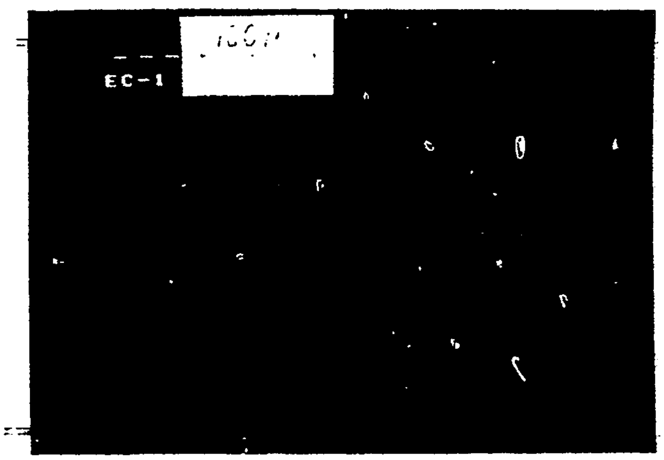

FIG. 7

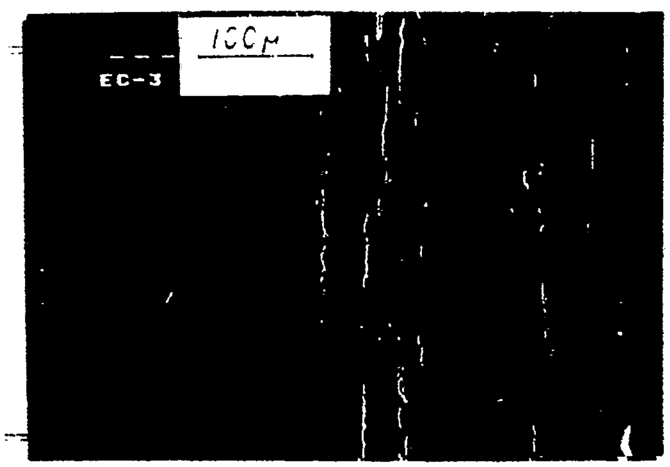

FIG. 8